# EUROPÄISCHE PATENTSCHRIFT

(11) **EP 3 118 019 B1**
(45) Veröffentlichungstag und Bekanntmachung des Hinweises auf die Patenterteilung: **05.04.2023**
(21) Anmeldenummer: 16001519.4
(22) Anmeldetag: 07.07.2016
(51) Int. Cl.: B60B 27/02, B60B 27/04

(54) **FREILAUFNABE FÜR EIN FAHRRAD**
FREEWHEELING HUB FOR A BICYCLE
MOYEU A ROUE LIBRE POUR UN VELO

(30) Priorität: 13.07.2015 DE 102015009143
(43) Veröffentlichungstag der Anmeldung: 18.01.2017
(73) Patentinhaber: SRAM Deutschland GmbH, 97424 Schweinfurt (DE)
(72) Erfinder: Braedt, Henrik, 97456 Dittelbrunn/OT Hambach (DE); Göbel, Joachim, 97279 Prosselsheim (DE); Correia, Vasco, 3030-503 Coimbra (PT); Boughton, David, 97082 Würzburg (DE)

(56) Entgegenhaltungen:
- EP-A1- 2 599 643
- DE-A1-102012 016 945
- DE-A1-102012 016 949
- US-A1- 2009 255 774

## Beschreibung

Die vorliegende Erfindung betrifft eine Freilaufnabe für ein Fahrrad umfassend:
- eine Nabenachse,
- eine Nabenhülse, die über eine Lageranordnung drehbar auf der Nabenachse gelagert ist,
- einen Antreiber, der drehbar auf der Nabenachse gelagert und mit wenigstens einer Ritzelanordnung verbindbar ist,
- eine Freilaufeinrichtung, die zwischen der Nabenhülse und dem Antreiber angeordnet ist und wahlweise eine Relativverdrehung zwischen der Nabenhülse und dem Antreiber zulässt oder die Nabenhülse und den Antreiber drehmomentübertragend koppelt,
wobei die Freilaufeinrichtung wenigstens einen ersten Kupplungsring und wenigstens einen zweiten Kupplungsring aufweist, wobei der erste Kupplungsring drehmomentübertragend mit der Nabenhülse gekoppelt oder koppelbar ist, und wobei der zweite Kupplungsring drehmomentübertragend mit dem Antreiber koppelbar oder gekoppelt ist, wobei die beiden Kupplungsringe einander zugewandte Verzahnungen aufweisen, und wobei der erste und der zweite Kupplungsring zwischen einer Eingriffsstellung, in der die Verzahnungen drehmomentübertragend ineinander eingreifen, und einer Freigabestellung relativ zur Nabenachse axial verlagerbar sind, in der die Verzahnungen nicht ineinander eingreifen.

Derartige Freilaufnaben sind aus dem Stand der Technik bekannt. So zeigt beispielsweise das Dokument DE 198 47 673 A1 eine Freilaufnabe, bei der die beiden Kupplungsringe jeweils über eine ihnen zugeordnete Feder aufeinander zugespannt sind.

Das Dokument DE 10 2012 016 945 A1 offenbart eine Nabe, die einen Nabenkörper und eine Antriebseinrichtung aufweist. An der Antriebseinrichtung kann ein Ritzelpaket angebracht werden. Ein Zahnscheibenfreilauf zwischen der Antriebseinrichtung und dem Nabenkörper ermöglicht eine Freilauffunktion. Der Zahnscheibenfreilauf verfügt über zwei Eingriffskomponenten, die als Zahnscheiben ausgeführt sind. Die Zahnscheiben weisen Axialverzahnungen auf, die miteinander in Eingriff gebracht werden können. In einen Aufnahmeraum in den Zahnscheiben wird jeweils eine Magneteinrichtung eingesetzt. Dabei sind die Magneteinrichtungen so angeordnet, dass der Südpol der einen Magneteinrichtung benachbart zu dem Nordpol der jeweils anderen Magneteinrichtung angeordnet ist. Die Magneteinrichtungen bilden eine Zugkrafteinrichtung, die dafür sorgt, dass die beiden Zahnscheiben in ihre Eingriffsstellung vorgespannt werden.

Eine Freilaufnabe mit Magneteinrichtungen ist auch aus dem Dokument DE 10 2012 016 949 A1 bekannt.

Ferner ist aus dem Dokument DE 10 2012 020 472 A1 eine Freilaufnabe bekannt, bei der die beiden Kupplungsringe in einem achsenthaltenden Schnitt betrachtet ein abgestuftes Wandstärkenprofil mit einem Abschnitt größerer Wandstärke und einem Abschnitt reduzierter Wandstärke aufweisen. Eine Verzahnung ist in einem mittleren Radialbereich der Kupplungsringe jeweils im Abschnitt größerer Wandstärke ausgebildet. Der Abschnitt reduzierter Wandstärke ist bei dem einen der beiden Kupplungsringe radial innerhalb der Verzahnung an diese anschließend ausgebildet. Der Abschnitt reduzierter Wandstärke bei dem anderen der beiden Kupplungsringe kann radial außerhalb der Verzahnung an diese anschließend ausgebildet sein.

Die voranstehend beschriebene Freilaufnabe hat sich in der Praxis durchaus bewährt. Es hat sich jedoch gezeigt, dass die bekannten Freilaufnaben insbesondere im Stra-βenradsport zu einer relativ starken Geräuschentwicklungen bzw. relativ starken Geräuschemissionen neigen. Dies liegt darin begründet, dass Laufräder wie zum Beispiel Hochprofil-Karbon-Felgen immer steifer und leichter werden und damit umso besser in der Freilaufnabe entstehende Vibrationen und Schwingungen weiterleiten und verstärken können. Insbesondere in der Kombination mit einer Hochprofil-Karbon-Felge bildet ein Laufrad einen optimalen Klangkörper, der die in der Freilaufnabe entstehenden Schwingungen und damit Geräusche weiterleiten und verstärken kann.

Es ist somit eine Aufgabe der vorliegenden Erfindung eine Freilaufnabe bereitzustellen, mit der die Geräuschentwicklung der Freilaufnabe und der Freilaufnabe in Kombination mit dem Laufrad verringert werden kann. Es ist eine weitere Aufgabe der vorliegenden Erfindung eine Freilaufnabe bereitzustellen, bei der der Totwinkel des Freilaufs relativ klein und auch das Freilaufmoment bei hohen Geschwindigkeiten möglichst gering ist.

Diese Aufgaben werden mit den in dem Patentanspruch 1 angegebenen Merkmalen gelöst.

Weitere Ausführungsformen sind in den abhängigen Ansprüchen angegeben.

Bei der erfindungsgemäßen Freilaufnabe hält wenigstens eine in Durchbrüchen in dem ersten Kupplungsring oder dem zweiten Kupplungsrings aufgenommene Magnetanordnung die Kupplungsringe in ihrer Eingriffsstellung, d. h. die Verzahnungen der Kupplungsringe stehen in drehmomentübertragendem Eingriff miteinander. Die Durchbrüche zur Aufnahme der Magnetanordnung sind dabei derart angeordnet und ausgebildet, dass bei einer Relativverdrehung zwischen ersten und zweiten Kupplungsring die Kupplungsringe aus der Eingriffsstellung in die Freilaufstellung und zurück überführbar sind.

Anders als beim Stand der Technik werden bei der erfindungsgemäßen Freilaufnabe keine gegenpolig angeordneten Magnetanordnungen verwendet, die die Zahnscheiben gegeneinander vorspannen. Die gegenpolig angeordneten Magnetanordnungen tragen stark zur Geräuschentwicklung bzw. zur Entstehung von Schwingungen und Vibrationen in der Freilaufnabe bei. Bei der erfindungsgemäßen Freilaufnabe ist eine Magnetanordnung in Durchbrüchen in dem ersten Kupplungsring vorgesehen, wodurch die Geräuschentwicklung bzw. die Entstehung von Schwingungen und Vibrationen erheblich reduziert werden kann.

In der Eingriffsstellung wird ein über den Antreiber auf die Freilaufnabe übertragenes Drehmoment über die in drehmomentübertragenen Eingriff stehenden Kupplungsringe auf die Nabenhülse übertragen. In der Eingriffsstellung findet keine Relativverdrehung bzw. Relativbewegung zwischen dem ersten Kupplungsring und dem zweiten Kupplungsring statt. Zur Überführung des ersten Kupplungsrings und des zweiten Kupplungsrings in die Freilaufstellung und auch zurück findet sowohl eine Relativverdrehung als auch eine Relativbewegung in axialer Richtung zwischen den Kupplungsringen statt. Mit den Durchbrüchen und der darin aufgenommene Magnetanordnung können bei einer Relativverdrehung zwischen dem ersten Kupplungsring und dem zweiten Kupplungsring der erste Kupplungsring und der zweite Kupplungsring schnell und zuverlässig in die Freilaufstellung oder zurück in die Eingriffsstellung überführt werden. Dies liegt darin begründet, dass sich durch die Durchbrüche und die in den Durchbrüchen angeordnete Magnetanordnung bei einer Relativverdrehung zwischen dem ersten Kupplungsring und dem zweiten Kupplungsring die Wirkung der Magnetkraft der in dem ersten Kupplungsring aufgenommenen Magnete auf den zweiten Kupplungsring verändert. Die Anziehungskraft der Magnete in den Durchbrüchen des ersten Kupplungsrings wirkt am stärksten auf den zweiten Kupplungsring, wenn der zweite Kupplungsring vorbestimmte Winkelpositionen relativ zu den Magneten des ersten Kupplungsrings einnimmt. Befindet sich der zweite Kupplungsring nicht in einer der vorbestimmten Winkelposition relativ zu dem ersten Kupplungsring wirkt die Anziehungskraft der Magnete weniger stark auf den zweiten Kupplungsring. Anders ausgedrückt verändert sich die Magnetkraft in Abhängigkeit der Winkelpositionen des ersten Kupplungsrings und des zweiten Kupplungsrings relativ zueinander. Diese veränderliche bzw. variierende Magnetkraft ermöglicht das schnelle und zuverlässige Überführen der Kupplungsringe in die Freilaufstellung und aus der Freilaufstellung zurück in die Eingriffsstellung, in der die beiden Kupplungsringe in drehmomentübertragenden Eingriff stehen und ein Drehmoment auf die Nabenhülse übertragen werden kann.

Gemäß einer Ausführungsform der Erfindung können die Durchbrüche in dem ersten Kupplungsring derart ausgebildet und angeordnet sein, dass ein Zahn des zweiten Kupplungsrings in der Eingriffsstellung einen von dem Durchbruch freigelegten Flächenabschnitt des in dem Durchbruch aufgenommenen Magneten vollständig überdeckt. Je größer der Überlappungsgrad zwischen einem Zahn des zweiten Kupplungsrings und dem freigelegten Abschnitt des in dem ersten Kupplungsring aufgenommenen Magnets ist, umso stärker wirkt die Anziehungskraft der Magnete in dem ersten Kupplungsring auf den Zahn des zweiten Kupplungsrings. Dies gilt auch unabhängig von der Eingriffsstellung, d.h. dies gilt auch dann, wenn die Kupplungsringe in axialer Richtung voneinander separiert sind. Befinden sich der erste Kupplungsring und der zweite Kupplungsring noch in einem in axialer Richtung der Nabenachse separierten Zustand, ist auch dann die Anziehungskraft des Magnets am größten, wenn ein Zahn des zweiten Kupplungsrings mit dem von dem Durchbruch freigelegten Abschnitt des Magneten weitgehend oder nahezu vollständig überlappt. Dadurch kann sichergestellt werden, dass die Kupplungsringe schnell und zuverlässig aus der Freilaufstellung zurück in die Eingriffsstellung verlagert werden können.

Die Durchbrüche in dem ersten Kupplungsring können zumindest abschnittsweise zwischen zwei benachbarten Zähnen der axialen Verzahnung des ersten Kupplungsrings ausgebildet sein. Der in dem jeweiligen Durchbruch aufgenommene Magnet kann den Bereich zwischen zwei benachbarten Zähnen überspannen, der im Wesentlichen einem Zahn des zweiten Kupplungsrings in der Eingriffsstellung entspricht, d.h. dieser Raum oder dieser Bereich wird in der Eingriffsstellung von einem Zahn des zweiten Kupplungsrings eingenommen. Die Durchbrüche können mit Anschlagflächen ausgebildet sein, an die sich die Magnete mit einer ihrer axialen Endflächen anlegen können. Bei stab- oder zylinderförmigen Magneten treten aus den axialen Endflächen die Feldlinien des Magnetfelds aus.

Die in dem ersten Kupplungsring aufgenommene Magnetanordnung kann eine Mehrzahl von Magneten umfassen. Die Magnete können stab- oder zylinderförmige Magnete sein. Die Form der Durchbrüche in dem ersten Kupplungsring kann an die Form bzw. die Gestalt der Magnete angepasst werden. Der von dem Durchbruch freigelegte Flächenabschnitt des in dem ersten Durchbruch aufgenommenen Magnets kann flächenmäßig im Wesentlichen einer Gleitfläche eines Zahns des zweiten Kupplungsrings entsprechen.

Gemäß einer Ausführungsform kann an der Nabenhülse wenigstens eine Führungshülse vorgesehen sein. Die wenigstens eine Führungshülse kann zur Führung des ersten und/oder des zweiten Kupplungsrings in Richtung der Nabenachse dienen. Bei hohen Geschwindigkeiten können von den Kupplungsringen Schwingungen und Vibrationen auf die Nabenhülse übertragen werden. Mit der wenigstens einen Führungshülse kann ein direkter Kontakt des ersten Kupplungsrings und/oder des zweiten Kupplungsrings mit der Nabenhülse in der Freilaufstellung verhindert werden, sodass keine Schwingungen und Vibrationen von dem ersten Kupplungsring und/oder dem zweiten Kupplungsring auf die Nabenhülse im Freilaufmodus übertragen werden können. Die wenigstens eine Führungshülse kann im Freilaufmodus der Freilaufnabe einen Kontakt des ersten Kupplungsrings in radialer und/oder axialer Richtung mit der Nabenhülse verhindern. Die wenigstens eine Führungshülse kann somit die Freilaufeinrichtung akustisch und schwingungstechnisch von der Nabenhülse entkoppeln. Die wenigstens eine Führungshülse kann aus einem Material hergestellt sein, das üblicherweise für Gleitlager verwendet wird. Dies kann insbesondere Kunststoff sein. Die wenigstens eine Führungshülse umfasst einen Führungsabschnitt zur Führung des ersten Kupplungsrings und/oder des zweiten Kupplungsrings. Ferner kann die wenigstens eine Führungshülse einen Befestigungsabschnitt umfassen, mit dem die wenigstens eine Führungshülse an der Nabenhülse angebracht sein kann.

Wenigstens ein Magnet kann in der wenigstens einen Führungshülse aufgenommen sein. Der wenigstens eine Magnet in der wenigstens einen Führungshülse kann mit der Magnetanordnung in dem wenigstens einen ersten Kupplungsring zum Halten der Kupplungsringe in der Eingriffsstellung zusammenwirken. Ferner kann der wenigstens eine in der wenigstens einen Führungshülse aufgenommene Magnet zum Verlagern der Kupplungsringe zwischen der Freilaufstellung und der Eingriffsstellung mit der Magnetanordnung in dem ersten Kupplungsring zusammenwirken.

Zumindest der erste Kupplungsring kann eine Ausnehmung zur Aufnahme der wenigstens einen Führungshülse aufweisen. Zumindest der erste Kupplungsring kann mit der wenigstens einen Ausnehmung in axialer Richtung verschieblich an der Führungshülse geführt sein. Die Führungshülse kann mit wenigstens einem Absatz oder wenigstens einer Anlagefläche ausgeführt sein. Der erste Kupplungsring kann sich in der Freilaufstellung an die Anlagefläche oder den Absatz anlegen.

Die wenigstens eine Führungshülse kann nachgiebig oder elastisch an der Nabenhülse gelagert sein. Mit anderen Worten kann die wenigstens eine Führungshülse schwingungsdämpfend in wenigstens einer Aufnahme in der Führungshülse aufgenommen werden. Insbesondere der Befestigungsabschnitt der wenigstens einen Nabenhülse kann in der Aufnahme in der Nabenhülse aufgenommen sein. Die wenigstens eine Führungshülse kann über wenigstens ein elastisches Element schwingungsdämpfend an der Nabenhülse angebracht sein. Beispielsweise kann das elastische Element aus einem Elastomer hergestellt sein. Das wenigstens eine elastische Element kann ringförmig ausgebildet sein.

Gemäß einer Ausführungsform der Erfindung kann die wenigstens eine Führungshülse derart ausgebildet sein, dass die wenigstens eine Führungshülse einen vorbestimmten Luftspalt zwischen dem in ihr aufgenommenen Magnet und den Kupplungsringen einstellt. Dadurch kann die Magnetkraft der in den Führungshülsen aufgenommenen Magnete derart eingestellt werden, dass Kupplungsringe schnell in die Eingriffsstellung zurück verlagert werden können, und dennoch ebenfalls eine zügige Trennung der Kupplungsringe beim Übergang in die Freilaustellung möglich ist.

Die wenigstens eine Ausnehmung in dem ersten Kupplungsring zur Aufnahme der wenigstens einen Führungshülse kann derart ausgebildet und angeordnet sein, dass die wenigstens eine Ausnehmung in der Eingriffsstellung von einem Zahn des zweiten Kupplungsrings zumindest abschnittsweise überdeckt ist. Die wenigstens eine Ausnehmung in dem Kupplungsring zur Aufnahme der wenigstens einen Führungshülse und ein Durchbruch der Durchbrüche zur Aufnahme der Magnetanordnung in dem ersten Kupplungsring können in Umfangsrichtung des ersten Kupplungsrings und des zweiten Kupplungsrings wechselweise angeordnet und um einen vorbestimmten Winkelbetrag zueinander versetzt angeordnet sein. Die wenigstens eine Führungshülse kann derart ausgebildet und an der Nabenhülse angeordnet sein, dass mit der wenigstens einen Führungshülse ein vorbestimmtes Spiel bzw. ein vorbestimmter Luftspalt zwischen einer Radialverzahnung der Nabenhülse und einer Radialverzahnung zumindest des ersten Kupplungsrings einstellbar ist. Dadurch kann erreicht werden, dass im Freilaufmodus nur zwischen diesen Verzahnungen ein Luftspalt aufrechterhalten wird, der eine schwingungstechnische Entkopplung bereitstellt. Mit diesem Luftspalt kann verhindert werden, dass die beim Aufeinandertreffen der Gleitflächen der Kupplungsringe entstehenden Schwingungen und Vibrationen auf die Nabenhülse übertragen werden. Die einzelnen Zähne der Radialverzahnungen der Nabenhülse und des ersten Kupplungsrings weisen Lastflanken und Nichtlastflanken auf. Die Lastflanken dienen zur Drehmomentübertragung zwischen dem ersten Kupplungsring und der Nabenhülse. Über die Führung des ersten Kupplungsrings mittels der wenigstens einen Führungshülse kann ein vorbestimmtes Spiel bzw. ein vorbestimmter Luftspalt zwischen den Radialverzahnungen der Nabenhülse und des ersten Kupplungsrings derart eingestellt werden, dass der Luftspalt bzw. das Spiel zwischen den Lastflanken der Zähne der Radialverzahnungen gering und gleichzeitig das Spiel bzw. der Luftspalt zwischen den Nichtlastflanken der Radialverzahnungen relativ groß ist. In der Eingriffsstellung der Kupplungsringe, d. h. es soll eine Drehmomentübertragung auf die Nabenhülse stattfinden, kann so unter Ausnutzung des zwischen der wenigstens einen Führungshülse und des ersten Kupplungsrings die Kraftübertragung über die Lastflanken ungehindert erfolgen. In der Freilaufstellung kann das auf dem ersten Kupplungsring wirkende Freilaufmoment vollständig von der wenigstens einen Führungshülse aufgenommen werden, da kein direkter Kontakt zwischen den Radialverzahnungen der Nabenhülse und des ersten Kupplungsrings stattfindet. Da die wenigstens eine Führungshülse im Freilaufmodus einen Kontakt zwischen den Radialverzahnungen der Nabenhülse und des ersten Kupplungsrings wirksam verhindern kann, können auch in radialer Richtung und/oder in Umfangsrichtung auftretende Schwingungen und Vibrationen nicht von der Freilaufeinrichtung auf die Nabenhülse übertagen werden. Die wenigstens eine Führungshülse kann dementsprechend die Nabenhülse schwingungstechnisch von der Freilaufeinrichtung entkoppein. Zusammenfassend ist festzuhalten: In Antriebsrichtung kann zwischen den Zähnen der Radialverzahnungen der Nabenhülse und des ersten Kupplungsrings eine Kraftübertragung erfolgen, d.h. die Zähne liegen aneinander an. Bestehen die Zähne beispielsweise aus Metall erfolgt die Kraftübertragung somit durch Metall auf Metall. Im Gegensatz dazu wird im Freilaufmodus über die wenigstens eine Führungshülse immer ein Luftspalt zwischen den Radialverzahnungen der Nabenhülse und des ersten Kupplungsrings eingestellt, so dass eine Übertragung von Schwingungen und Vibrationen auf die Nabenhülse verhindert werden kann.

Die in den Durchbrüchen des ersten Kupplungsrings aufgenommenen Magnete der Magnetanordnung können die gleiche Ausrichtung bezüglich ihres Nord- und Südpols aufweisen. Das wenigstens eine in der wenigstens einen Führungshülse aufgenommene Magnet kann die gleiche Ausrichtung bezüglich des Nord- und Südpols wie die in dem ersten Kupplungsring aufgenommenen Magnete aufweisen. Sämtliche Magnete können somit gleichpolig angeordnet sein.

Gemäß einer Ausführungsform kann sich die von der wenigstens einen Magnetanordnung bereitgestellte Anziehungskraft in Abhängigkeit der Winkelpositionen des ersten Kupplungsrings und des zweiten Kupplungsrings relativ zueinander verändern. Ferner kann sich die von dem wenigstens einen Magnet in der wenigstens einen Führungshülse bereitgestellte Anziehungskraft in Abhängigkeit der Winkelpositionen des ersten Kupplungsrings und des zweiten Kupplungsrings relativ zueinander verändern.

Somit können hohe magnetische Anziehungskräfte der wenigstens einen Magnetanordnung und/oder des wenigstens eines Magnets in der Führungshülse in Abhängigkeit von vorbestimmten Winkelpositionen gewährleistet werden, die die Kupplungsringe aneinander halten. Da sich die Anziehungskräfte in Abhängigkeit der Winkelpositionen der Kupplungsringe ändern, kann beispielsweise durch einen starken Abfall der Anziehungskräfte der Magnete bei sich verändernden Winkelpositionen der Kupplungsringe eine schnelle Trennung der Kupplungsringe zum Übergang in die Freilaufstellung erreicht werden.

Auch in der Freilaufstellung können in Abhängigkeit der Winkelpositionen der Kupplungsringe relativ zueinander hohe Anziehungskräfte auf den zweiten Kupplungsring wirken, wobei die Anziehungskräfte aufgrund des axialen Abstands zwischen den Kupplungsringen in der Freilaufstellung etwas geringer als in der Eingreifstellung sind. Durch diese relativen großen Anziehungskräfte in vorbestimmten Winkelpositionen kann erreicht werden, dass die Kupplungsringe aus der Freilaufstellung schnell wieder zurück in die Eingreifstellung überführt werden können, in der sie in drehmomentübertragenden Eingriff miteinander stehen.

Der erste Kupplungsring und der zweite Kupplungsring können derart ausgebildet sein, dass in zumindest einer vorbestimmten Winkelposition des ersten Kupplungsrings relativ zum zweiten Kupplungsring ausschließlich die Anziehungskraft der wenigstens einen Magnetanordnung auf den zweiten Kupplungsring wirkt. Der erste Kupplungsring und der zweite Kupplungsring können ferner auch derart ausgebildet sein, dass in zumindest einer vorbestimmten Winkelposition des ersten Kupplungsrings relativ zum zweiten Kupplungsring die Anziehungskräfte der wenigstens einen Magnetanordnung und des wenigstens einen Magnets in der wenigstens einen Führungshülse zusammen auf den zweiten Kupplungsring wirken.

Gemäß einer Ausführungsform können der erste Kupplungsring und der zweite Kupplungsring über ein Entkopplungselement von der Nabenhülse zumindest in axialer Richtung schwingungstechnisch entkoppelbar sein.

Die voranstehend beschriebenen Aufgaben werden auch mit einer Freilaufnabe mit den Merkmalen des Patentanspruchs 16 gelöst. Die Freilaufeinrichtung ist über wenigstens eine Entkopplungseinrichtung von der Nabenhülse schwingungstechnisch entkoppelt.

Die Entkopplungseinrichtung stellt eine Entkopplung der Freilaufeinrichtung von der Nabenhülse in axialer, radialer und Umfangsrichtung bereit. Die Entkopplung in radialer Richtung und Umfangsrichtung bezieht sich auf den Fall, wenn sich die Freilaufeinrichtung im Freilaufmodus befindet, in dem kein Drehmoment übertragen wird.

Die wenigstens eine Entkopplungseinrichtung sorgt dafür, dass in der Freilaufeinrichtung entstehende Vibrationen und Schwingungen nicht auf die Nabenhülse übertragen werden können. Dadurch wird verhindert, dass durch die in der Freilaufeinrichtung entstehenden Schwingungen und Vibrationen Geräusche entwickelt werden, die den Fahrer des Fahrrads und seine Umgebung stören können. Die wenigstens eine Entkopplungseinrichtung verhindert ferner, dass die Kupplungsringe der Freilaufeinrichtung im Freilaufmodus in radialer Richtung, in axialer Richtung und in Umfangsrichtung an der Nabenhülse anschlagen können. Dies trägt ebenfalls erheblich zur Reduzierung der Geräuschentwicklung bei.

Die wenigstens eine Entkopplungseinrichtung kann wenigstens ein Entkopplungselement aufweisen. Das wenigstens eine Entkopplungselement kann ein axiales Anschlagen des ersten Kupplungsrings und/oder des zweiten Kupplungsrings an der Nabenhülse verhindern. Durch das wenigstens eine Entkopplungselement kann ferner die Herstellung der Freilaufnabe vereinfacht und auch die Herstellungskosten reduziert werden. Durch das wenigstens eine Entkopplungselement kann die Toleranzkette zwischen Nabenhülse, ersten Kupplungsring und zweiten Kupplungsring reduziert werden, d.h. genannten Komponenten können mit einem breiteren Toleranzband hergestellt werden, was die Herstellungsaufwand und auch die Herstellungskosten reduziert.

Das wenigstens eine Entkopplungselement kann ein Entkopplungsring sein. Durch das wenigstens eine Entkopplungselement bzw. durch den wenigstens einen Entkopplungsring wird somit die Nabenhülse von Schwingungen bzw. Schlägen in axialer Richtung von der von dem ersten Kupplungsring und dem zweiten Kupplungsring gebildeten Freilaufrichtung entkoppelt. Dadurch wird eine Übertragung von Schwingungen und Schlägen über die Nabenhülse auf das Laufrad bzw. die Felge verhindert, wodurch die Geräuschentwicklung der Freilaufnabe bzw. der Kombination aus Freilaufnabe und Laufrad erheblich reduziert werden kann. Das wenigstens eine Entkopplungselement ist vorzugsweise aus einem dämpfenden Material hergestellt. Dadurch wird die von dem ersten Kupplungsring und dem zweiten Kupplungsring gebildete Freilaufeinrichtung von der Nabenhülse entkoppelt. Das wenigstens eine Entkopplungselement kann aus einem Kunststoff oder einem Elastomer hergestellt sein.

Der wenigstens eine Entkopplungsring, der erste Kupplungsring und der zweite Kupplungsring können eine separate Baugruppe bilden.

Diese Baugruppe kann mit ihrem Innenumfang an der Nabenhülse gleiten. Der wenigstens eine Entkopplungsring und der zweite Kupplungsring können derart verbunden sein, dass eine Relativbewegung zwischen dem ersten Kupplungsring und dem mit dem zweiten Kupplungsring verbundenen wenigstens einen Entkopplungsring in axialer Richtung möglich ist. Der erste Kupplungsring kann mit seiner Innenumfangsfläche an der von dem zweiten Kupplungsring und dem wenigstens einen Entkopplungsring gebildeten Einheit in axialer Richtung verschieblich und verdrehbar gelagert sein. Ferner kann die von dem zweiten Kupplungsring und dem wenigstens einen Entkopplungsring gebildete Einheit an der Außenumfangsfläche der Nabenhülse in axialer Richtung verlagerbar und verdrehbar gelagert sein. Die von dem zweiten Kupplungsring und dem wenigstens einen Entkopplungsring gebildete Einheit kann die Relativbewegung des ersten Kupplungsrings in axialer Richtung begrenzen. Dazu kann der wenigstens eine Entkopplungsring einen in radialer Richtung vorspringenden Vorsprung aufweisen. Neben dem Vorsprung des wenigstens einen Entkopplungsrings kann auch der zweite Kupplungsring eine Relativbewegung des ersten Kupplungsrings in axialer Richtung begrenzen.

Die wenigstens eine Entkopplungseinrichtung kann wenigstens eine Führungshülse aufweisen. Die wenigstens eine Führungshülse kann an der Nabenhülse vorgesehen sein. Die wenigstens eine Führungshülse kann zur Führung des ersten und/oder des zweiten Kupplungsrings in Richtung der Nabenachse dienen.

Die wenigstens eine Führungshülse kann wenigstens einen Anschlag für den ersten Kupplungsring aufweisen. An den wenigstens einen Anschlag kann sich der erste Kupplungsring anlegen. Der erste Kupplungsring kann sich in Abhängigkeit der Winkelposition des ersten Kupplungsrings relativ zu dem zweiten Kupplungsring an den wenigstens einen Anschlag an der wenigstens einen Führungshülse anlegen. Dies kann insbesondere bei der Überführung der Kupplungsringe aus der Eingriffsstellung in die Freigabestellung erfolgen.

Die wenigstens eine Führungshülse kann wenigstens eine Anlagefläche zur Anlage des wenigstens eines Entkopplungselements aufweisen. Das wenigstens eine Entkopplungselement kann an der wenigstens einen Anlagefläche der Führungshülse anliegen und in Abhängigkeit der Winkelposition des ersten Kupplungsrings relativ zu dem zweiten Kupplungsring von der wenigstens einen Anlagefläche an der wenigstens einen Führungshülse abgehoben werden. Die wenigstens eine Anlagefläche kann sich in senkrecht zur Achse der Freilaufnabe erstrecken.

Die beiden vorstehenden Absätze gelten für sämtliche der voranstehend beschriebenen Ausführungsformen, die damit derartig ausgebildete Führungshülse aufweisen können.

Ferner kann in dem in der Nabenhülse zur Aufnahme der Freilaufeinrichtung ausgebildeten Raum wenigstens ein schallreduzierendes Material vorgesehen sein. Das schallreduzierende Material kann alternativ zu den voranstehend beschriebenen Entkopplungsmaßnahmen und auch mit herkömmlichen Freilaufnaben verwendet werden.

Die schallreduzierenden Elemente können schallabsorbierende Elemente oder schalldämpfende Elemente sein. Bei einer Schallabsorption wird die Schallenergie durch Umwandlung in Wärme vermindert. Bei der Schalldämpfung kann die Schallintensität dadurch verringert werden, dass die Schallenergie beispielsweise auf eine größere Fläche umverteilt wird. Die schallreduzierenden Elemente dienen dementsprechend dazu, störende Geräusche in der Fahrradnabe zu verringern. Die schallreduzierenden Elemente können aus porösen Materialien hergestellt sein. Geeignete Materialien können mikrozellige Polymere, Polyurethane und andere porig geschäumte Kunststoffe sein. Auch natürliche poröse Werkstoffe wie zum Beispiel Kork können als schallreduzierendes Bauelement verwendet werden. Durch den Absorptions- bzw. Dämpfungsgrad der porösen oder zelligen Werkstoffe kann auf weitere schalldämpfende Maßnahmen in der Freilaufnabe verzichtet werden. Dadurch kann beispielsweise auf schleifende Dichtungen, die die Reibung zwischen den einzelnen Komponenten der Freilaufnabe erhöhen, verzichtet werden.

Das schallreduzierende Material kann zumindest einen Wandabschnitt des in der Nabenhülse zur Aufnahme der Freilaufeinrichtung ausgebildeten Raums bedecken.

Im Folgenden werden beispielhafte Ausführungsformen der Erfindung mit Bezug auf die beigefügten Figuren beschrieben. Es stellen dar:
- Figur 1: eine achsenthaltende Schnittansicht einer Freilaufnabe gemäß einer ersten Ausführungsform der Erfindung;
- Figur 2: eine Schnittansicht der Nabenachse der Freilaufnabe gemäß Figur 1;
- Figur 3: eine vergrößerte Detailansicht des Details III in Figur 2;
- Figur 4: eine teilweise aufgebrochene perspektivische Ansicht einer Kupplungsvorrichtung gemäß der ersten Ausführungsform der Erfindung;
- Figur 5: eine vergrößerte Ansicht des Ausschnitts V in Figur 4;
- Figur 6: eine teilweise aufgebrochene perspektivische Ansicht der Freilaufnabe gemäß der ersten Ausführungsform der Erfindung;
- Figur 7: eine vergrößerte Ansicht des Ausschnitts VII in Figur 6;
- Figur 8: eine Schnittansicht der Freilaufnabe gemäß der ersten Ausführungsform der Erfindung;
- Figur 9: eine vergrößerte Ansicht des Ausschnitts IX in Figur 8;
- Figuren 10 bis 12: Schnittansichten verschiedener Stellungen der Freilaufeinrichtung der Freilaufnabe gemäß der ersten Ausführungsform der Erfindung beim Übergang aus der Eingriffsstellung in die Freigabestellung;
- Figuren 13 bis 15: vergrößerte Ansichten der von dem Entkopplungsring und den beiden Kupplungsringen gebildeten Baugruppe beim Übergang aus der Eingriffsstellung in die Freilaufstellung;
- Figur 16: eine Vorderansicht einer Freilaufnabe gemäß einer zweiten Ausführungsform der Erfindung;
- Figur 17: eine Schnittansicht der Freilaufnabe gemäß der zweiten Ausführungsform der Erfindung;
- Figur 18: eine weitere Schnittansicht der Freilaufnabe gemäß der zweiten Ausführungsform der Erfindung; und
- Figur 19: ein Diagramm des Verlaufs der Anziehungskraft.

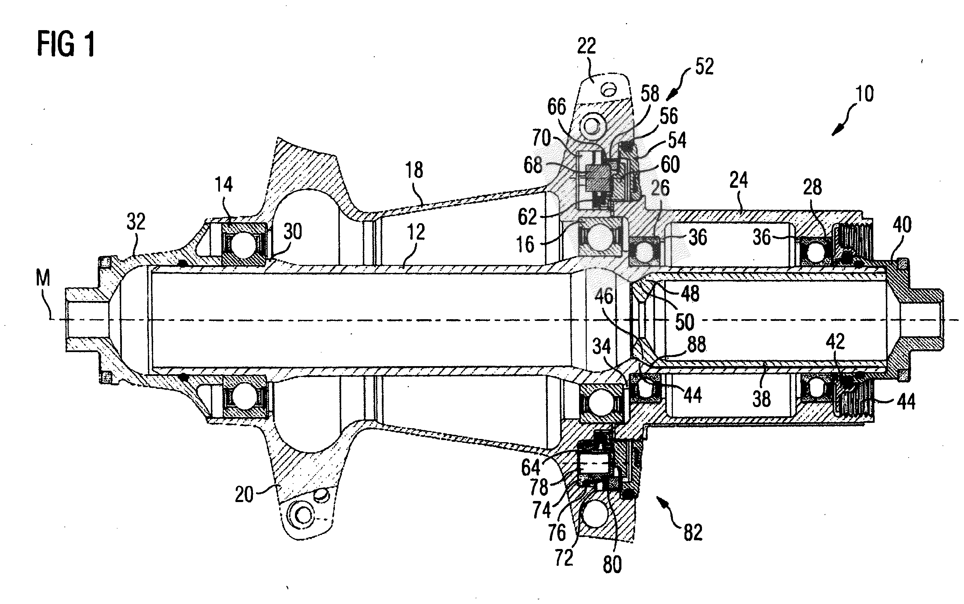

In Figur 1 ist eine achsenthaltende Schnittansicht der Freilaufnabe gemäß einer ersten Ausführungsform der Erfindung gezeigt, wobei die Freilaufnabe allgemein mit 10 bezeichnet ist. Die Längsachse der Freilaufnabe 10 ist allgemein mit M bezeichnet. Die Freilaufnabe 10 umfasst eine Nabenachse 12, in die eine nicht gezeigte Achse mit Schnellspannmechanismen einsteckbar ist, über die die Nabenachse 12 an einem Fahrradrahmen fixierbar ist.

Auf der Nabenachse 12 ist über die beiden Wälzlager 14, 16 eine Nabenhülse 18 drehbar gelagert. Die Nabenhülse 18 weist zwei Speichenflansche 20, 22 auf, an denen Speichen in an sich bekannter Weise anbringbar sind. Ferner ist an der Nabenachse 12 ein Antreiber 24 bzw. eine Antreiberhülse 24 über Wälzlager 26 und 28 drehbar gelagert.

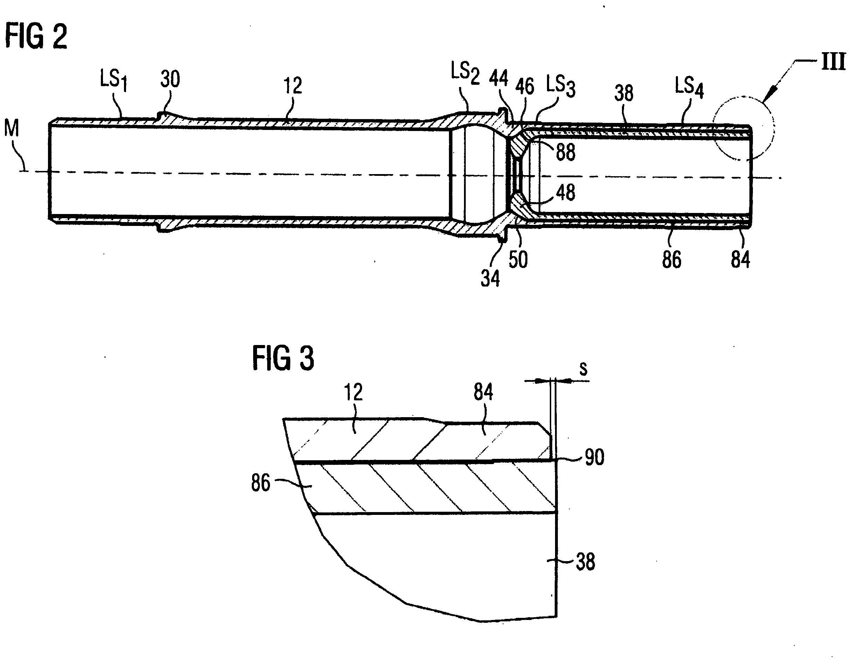

Das Lager 14 stützt sich an einem an der Nabenachse 12 ausgebildeten Vorsprung 30 ab. Das Lager 14 wird über ein Verschlusselement 32, das auf die Nabenachse 12 aufgesteckt ist, gegen den Vorsprung 30 gedrückt. An der Achse 12 ist ein weiterer Vorsprung bzw. eine Stufe 34 ausgebildet. An jeder axialen Seite dieser Stufe 34 stützt sich eines der Lager 16 und 26 ab. An der Antreiberhülse 24 sind nach radial innen vorspringende Vorsprünge 36 vorgesehen, die zum Abstützen bzw. Positionieren der Lager 26 und 28 auf der Nabenachse 12 dienen. In der Nabenachse 12 ist ein in Richtung der Achse M verlagerbares Befestigungselements 38 aufgenommen, das insbesondere dazu dient, das Lager 26 in seiner vorbestimmten Position über eine Presspassung festzulegen. Auf das Befestigungselement 38 und die Nabenachse 12 wird mit Bezug auf Figur 2 nochmals näher eingegangen. Die Antreiberhülse 24 wird mit den Lagern 26 und 28 über Verschlusselemente 40, 42 an der Nabenachse 12 gesichert. Dazu ist das Verschlusselement 40 auf die Nabenachse 12 aufgesteckt und wird mit einem Schnellspanner aufgespannt. An der Antreiberhülse 24 ist ein Abschnitt 44 mit einem Innengewinde erkennbar, der zur Befestigung einer in Figur 1 nicht gezeigten Ritzelanordnung an der Nabenhülse 24 dient.

Wird das Verschlusselement 40 auf die Nabenachse 12 aufgesteckt, wird das Befestigungselement 38 entlang der Achse M zu einem nach radial innen vorstehenden Vorsprung 46 an der Nabenachse 12 verlagert bzw. gegen diesen Vorsprung gepresst. Der Vorsprung 44 weist eine geneigt bzw. schräg zu der Achse M verlaufende Anlagefläche 46 auf, die im Wesentlichen zu dem Verschlusselement 40 zeigt. Das Befestigungselement 38 weist einen Endabschnitt 48 auf, der den Durchmesser des Befestigungselements 38 verengt bzw. einschnürt. Der Endabschnitt 48 ist somit konisch ausgebildet. An diesem Endabschnitt 48 ist eine geneigte Anlagefläche 50 vorgesehen, die mit der Anlagefläche 46 an dem Vorsprung 40 der Nabenachse 12 in Kontakt gebracht werden kann. Die Anlagefläche 46 des Vorsprungs 44 bildet eine Gegenanlagefläche für die Anlagefläche 50 des Befestigungselements 38. Das Befestigungselement 38 wird bei der Verschraubung des Verschlusselements 40 mit der Nabenhülse 12 gegen den Vorsprung 44 bzw. die Anlagefläche 46 verspannt. Das Befestigungselement 38 kann somit eine axial auf das Befestigungselement 38 ausgeübte Kraft in eine radiale Vergrößerung des Querschnitts der Nabenachse 12 umsetzen. Dadurch wird in Abhängigkeit der Neigungswinkel der Anlageflächen 46 und 50 der Querschnitt der Nabenachse 12 abschnittsweise oder auch punktuell in radialer Richtung vergrößert oder aufgeweitet. Durch diese Aufweitung vergrößert sich der Außendurchmesser der Nabenachse. Die Vergrößerung des Durchmessers bzw. des Außendurchmessers der Nabenachse 12 führt dazu, dass eine Presspassung zwischen dem Lager 26 und dem Außenumfang der Nabenachse 12 hergestellt wird. Dadurch wird das Lager 26 in seiner vorbestimmten Position an der Nabenachse 12 in radialer Richtung festgelegt. Das Lager 26 kann sich durch den hergestellten Presssitz nicht lockern und der Abstand zwischen den Lagern 26 und 28 kann dauerhaft festgelegt werden, ohne dass bei der Montage spezielle Maßnahmen zur Einhaltung des Abstands getroffen werden müssen. Insbesondere kann auf die aus dem Stand der Technik bekannten Distanzhülsen zwischen den Lager 26 und 28 verzichtet werden. Durch die dauerhafte Festlegung des Abstands zwischen dem Lager 26 und dem Lager 28 an der Nabenachse werden Lagerschäden und Verschleißerscheinungen an der Achse sowie an den Lagern vermieden.

Zwischen der Antreiberhülse 24 und der Nabenhülse 18 ist die Freilaufeinrichtung 52 erkennbar. Die Freilaufeinrichtung 52 wird über Verschlusselemente 54, die sich zwischen der Nabenhülse 18 und der Antreiberhülse 24 erstrecken, zur Umgebung hin abgeschlossen und auch über einen Dichtungsring 56 abgedichtet. Die Freilaufeinrichtung 52 ist in der Nabenhülse 18 aufgenommen. Die Freilaufeinrichtung 52 umfasst einen ersten Kupplungsring 58 und einen zweiten Kupplungsring 60. Der zweite Kupplungsring 60 ist mit einem Entkopplungsring 62 verbunden. Die Verbindung zwischen dem Entkopplungsring 62 und dem zweiten Kupplungsring 60 kann beispielswiese über eine Rast- oder eine Schnappverbindung hergestellt werden. Der Entkopplungsring 62 kann aus Kunststoff hergestellt sein. Der Entkopplungsring 62 soll verhindern, dass die Kupplungsringe 58 und 60 an der Nabenhülse in axialer Richtung anschlagen. Dieses Anschlagen an der Nabenhülse 18 kann zu unerwünschten Schwingungen und Geräuschentwicklungen führen. Der Entkopplungsring 62 entkoppelt somit die Kupplungsringe 58 und 60 in axialer Richtung schwingungstechnisch bzw. akustisch von der Nabenhülse 18. Der erste Kupplungsring 58 kann mit seinem Innenumfang auf den zweiten Kupplungsring 60 und den Entkopplungsring 62 sowohl in axialer Richtung als auch in Umfangsrichtung relativ bewegt werden. Anders ausgedrückt kann der erste Kupplungsring 58 mit seinem Innenumfang auf dem Entkopplungsring 62 und den zweiten Kupplungsring 60 gleiten. Der Entkopplungsring 62 weist einen nach radial außen vorstehenden Vorsprung 64 auf, über den der erste Kupplungsring 58 an dem Entkopplungsring 62 und dem zweiten Kupplungsring 60 gehalten wird.

Der erste Kupplungsring 58, der zweite Kupplungsring 60 und der Entkopplungsring 62 bilden eine separate Baugruppe, die an der Nabenhülse 18 bewegbar angeordnet ist. Der mit dem Entkopplungsring 62 verbundene zweite Kupplungsring 60 kann sich zusammen mit dem Entkopplungsring 62 in axialer Richtung relativ zu dem ersten Kupplungsring 58 bewegen. Wie voranstehend bereits erwähnt wurde, kann sich auch der erste Kupplungsring 58 relativ zu dem zweiten Kupplungsring 60 und dem Entkopplungsring 62 bewegen.

Der erste Kupplungsring 58 weist gestuft profilierte Durchbrüche 66 auf, in denen Magnete 68 eingesetzt und über die gestufte Profilierung gehalten sind. Die Magnete 68 können zylinderförmig oder stabförmig ausgebildet sein. Die Durchbrüche 66 sind in ihrer Form an die Gestalt der Magnete 68 angepasst. Die Magnete 68 erstrecken sich abschnittsweise in einer Ausnehmung 70 in der Nabenhülse 18. In einer weiteren Ausnehmung 72 in der Nabenhülse 18 sind Führungshülsen 74 aufgenommen, die über ein elastisches Element 76 elastisch in der Ausnehmung 72 der Nabenhülse 18 gelagert sind. Die Führungshülsen 74 können aus einem Material hergestellt sein, das üblicherweise für Gleitlager verwendet wird. In den Führungshülsen 74 sind Magnete 78 aufgenommen. Die Magnete 78 können ebenfalls zylinder- oder stabförmig ausgebildet sein. Der erste Kupplungsring 58 weist eine Ausnehmung 80 zur abschnittsweisen Aufnahme der Führungshülsen 74 auf. Der erste Kupplungsring 58 ist in axialer Richtung verlagerbar an den Führungshülsen 74 gelagert. Die Führung über die Führungshülsen 74 und die Verbindung zwischen dem ersten Kupplungsring 58 und der Nabenhülse 18 über die Führungshülsen 74 sorgt für die akustische Entkopplung zwischen der Freilaufeinrichtung 52 und der Nabenhülse 18 in axialer und radialer Richtung, da über die Führungshülsen 74 ein vorbestimmter Abstand in radialer Richtung zwischen der Nabenhülse 18 und dem ersten Kupplungsring 58 eingestellt werden kann.

Die Führungshülsen 74 und der Entkopplungsring 62 bilden zusammen eine Entkopplungseinrichtung 82, die die Freilaufeinrichtung 52 schwingungstechnisch von der Nabenhülse 18 entkoppelt. Die Führungshülse 74 und der Entkopplungsring 62 verhindert ein Anschlagen der Kupplungsringe 58, 62 der Freilaufeinrichtung 52 an der Nabenhülse 18 in axialer Richtung. Im Freilaufmodus der Freilaufnabe 10 verhindert insbesondere die Führungshülse 74 ein Anschlagen des ersten Kupplungsrings 58 an der Nabenhülse 18 in radialer Richtung und in Umfangsrichtung.

Figur 2 zeigt eine Schnittansicht der Nabenachse 12 mit dem Befestigungselement 38.

An der Nabenachse 12 sind die nach radial außen ragenden Vorsprünge 30 und 34 erkennbar, die zur Anlage der Lager 14, 16, 26 der Freilaufnabe 10 dienen (siehe Figur 1). In axialer Richtung links neben dem Vorsprung 30 ist ein Lagersitz LS₁ zur Befestigung des Lagers 14 (siehe Figur 1) erkennbar. Links und rechts in axialer Richtung neben dem Vorsprung bzw. der Stufe 34 sind ebenfalls Lagersitze LS₂ und LS₃ erkennbar, die zur Befestigung der Lager 16 und 26 dienen. Ein weiterer Lagersitz LS₄ ist in axialer Richtung links neben einem Presssitzabschnitt 84 erkennbar. Die Nabenachse 12 weist im Bereich der Lagersitze LS₁ bis LS₄ einen leicht vergrößerten Außendurchmesser verglichen mit ihren übrigen Abschnitten auf.

In der Nabenachse 12 ist das Befestigungselement 38 in Richtung der Achse M verlagerbar aufgenommen. Das Befestigungselement 38 weist einen Rohrabschnitt 86 auf, der sich entlang der Innenumfangsfläche der Nabenachse 12 erstreckt. Am Übergang von dem Rohrabschnitt 86 auf den Endabschnitt 48 ist eine Kante 88 ausgebildet, die zusammen mit der Anlagefläche 50 des Befestigungselementes 48 den Querschnitt der Nabenachse 12 im Bereich der Anlagefläche 46 an den Vorsprung 44 der Nabenachse 12 aufweitet. Das Befestigungselement 38 liegt mit seiner schräg zur Achse M verlaufenden Anlagefläche 50 an der schräg zur Achse M verlaufenden Anlagefläche 46 des nach radial innen ragenden Vorsprungs 44 an der Nabenachse 12 an. Der Endabschnitt 48 ist konisch ausgebildet. Verglichen mit der übrigen Wandstärke des Befestigungselements 38 in dem Rohrabschnitt 86 weist der Endabschnitt 48 eine vergrößerte Wandstärke auf. Diese vergrößerte Wandstärke und die damit einhergehende größere Steifigkeit des Endabschnitts 48 sorgt dafür, dass über den Endabschnitt 48 der Außenumfang der Nabenhülse 12 im Bereich des Lagersitzes LS₃ vergrößert werden kann. Wird über das Verschlusselement 40 eine in axialer Richtung wirkende Kraft auf das Befestigungselement 38 ausgeübt, wird das Befestigungselement 38 mit seiner Anlagefläche 50 gegen die Gegenlagefläche 46 des Vorsprungs 44 gedrückt. Aufgrund der axialen Kraft wandert das Befestigungselement 38 mit seinem konischen Endabschnitt 48 bzw. der Anlagefläche 50 in axialer Richtung entlang der Gegenanlagefläche 46. Sobald die Kante 86 des Befestigungselements 38 den Bereich der Gegenanlagefläche 46 erreicht, wird der Querschnitt der Nabenachse 12 im Bereich des Lagersitzes LS₃ in radialer Richtung aufgeweitet. Dadurch wird ein Presssitz zwischen der Lagerachse 12 und dem Innenring des Lagers 26 erzeugt.

Figur 3 zeigt eine vergrößerte Ansicht des Ausschnitts III in Figur 2.

In Figur 3 ist erkennbar, dass das Befestigungselement 38 in unbelastetem Zustand mit einem Abschnitt 90 um eine vorbestimmte Distanz s in axialer Richtung aus der Nabenachse 12 vorsteht. Dies ist notwendig, damit über das Verschlusselement 40 (siehe Figur 1) eine axiale Kraft auf das Befestigungselement 38 ausgeübt werden kann, mit der das Befestigungselement 38 in axialer Richtung gegen den Vorsprung 44 an der Innenumfangsfläche der Nabenachse 12 gedrückt wird. Die über das Verschlusselement 40 auf das Befestigungselement 38 ausgeübte Kraft wird über den Endabschnitt 48 des Befestigungselements 38 mit seiner Gegenanlagefläche 50 auf die Anlagefläche 46 des Vorsprungs 44 übertragen, und in eine radiale Aufweitung des Umfangs der Nabenachse 12 im Bereich des Lagersitzes LS₃ umgesetzt.

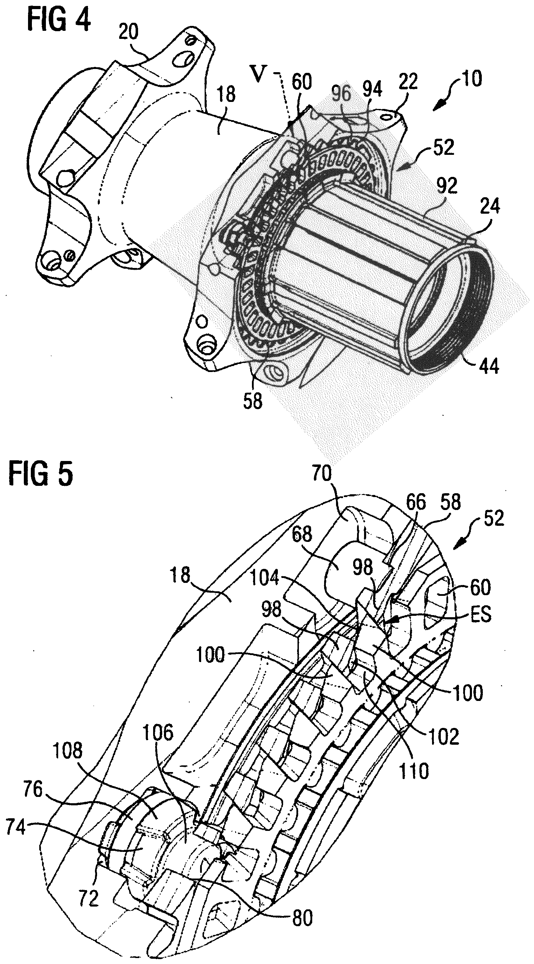

Figur 4 zeigt eine teilweise aufgebrochene Ansicht der Freilaufnabe 10.

Die Nabenhülse 18 weist die Speichenflansche 20 und 22 auf. Zwischen der Nabenhülse 18 und der Antreiberhülse 24 ist die Freilaufeinrichtung 52 gezeigt, die im Bereich des Speichenflansches 22 in der Nabenhülse 18 vorgesehen ist.

An der Antreiberhülse 24 sind nach radial außen vorspringende Vorsprünge 92 erkennbar, die ein Aufschieben einer Ritzelanordnung (nicht gezeigt) in axialer Richtung ermöglichen. Ferner ist in Figur 4 der Innengewindeabschnitt 44 erkennbar, der zur Befestigung einer Ritzelanordnung (nicht gezeigt) vorgesehen ist.

Der erste Kupplungsring 58 und der zweite Kupplungsring 60 sind ebenfalls in Figur 4 erkennbar. An dem ersten Kupplungsring 58 ist eine radiale Außenverzahnung 94 vorgesehen und die Nabenhülse 18 weist eine korrespondierende radiale Innenverzahnung 96 auf.

Figur 5 zeigt eine vergrößerte Ansicht des Ausschnitts V in Figur 4.

In Figur 5 ist die Freilaufeinrichtung 52 erkennbar. Die Freilaufeinrichtung 52 umfasst den ersten Kupplungsring 58 und den zweiten Kupplungsring 60. Sowohl der erste Kupplungsring 58 als auch der zweite Kupplungsring 60 weisen einander entgegen gerichtete axiale Verzahnungen auf. Die axiale Verzahnung des ersten Kupplungsrings 58 weist die axialen Zähne 98 auf. Die Axialverzahnung des zweiten Kupplungsrings 60 weist die axialen Zähne 100 auf. Die Zähne 98 und 100 weisen jeweils Gleitflächen 102 und 104 auf, an denen die Zähne 98 und 100 aneinander abgleiten können, sobald eine Relativverdrehung zwischen dem ersten Kupplungsring 58 und dem zweiten Kupplungsring 60 stattfindet. Gemäß Figur 5 befindet sich die Freilaufeinrichtung 52 in ihrer Eingriffsstellung, d. h. der erste Kupplungsring 58 und der zweiten Kupplungsring 60 stehen in drehmomentübertragendem Eingriff miteinander. Dies ist insbesondere an den mit dem Pfeil ES gekennzeichneten Stellen erkennbar, die die Zähne 98 des ersten Kupplungsrings 58 im Eingriff mit den Zähnen 100 des zweiten Kupplungsrings 60 zeigen.

Der erste Kupplungsring 58 weist Durchbrüche 66 zur Aufnahme von Magneten 68 auf. Die Magnete 68 erstrecken sich abschnittsweise in einer Ausnehmung 70 in der Nabenhülse 18.

Der erste Kupplungsring 58 weist ferner eine weitere Ausnehmung 80 zur Aufnahme eines Führungsabschnitts 106 der Führungshülse 74 auf. An den Führungsabschnitt 106 schließt sich der Befestigungsabschnitt 108 der Führungshülse 74 an. Der Befestigungsabschnitt 108 ist über ein elastisches Element 76 elastisch in der Ausnehmung 72 in der Nabenhülse 18 aufgenommen. Das elastische Element 76 kann beispielsweise ringförmig ausgebildet sein.

Der zweite Kupplungsring 60 weist ferner Ausnehmungen 110 auf, die in Umfangsrichtung verteilt an dem Kupplungsring 60 vorgesehen sind.

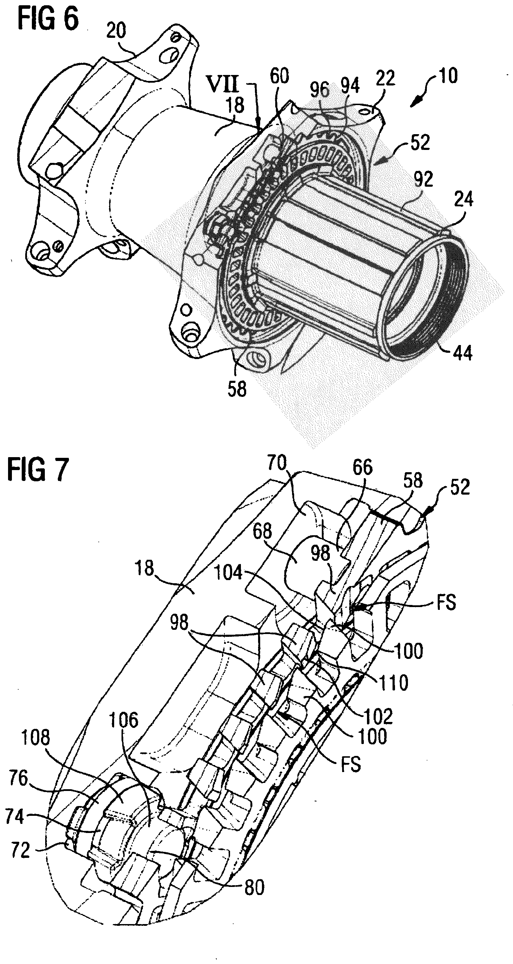

Figur 6 zeigt wiederum eine teilweise aufgebrochene perspektivische Ansicht der Kupplungsvorrichtung 10, die im Wesentlichen der voranstehend beschriebenen Figur 4 entspricht. Die wesentlichen Unterschiede zwischen Figur 4 und Figur 6 sind im Ausschnitt VII erkennbar. Auf den Ausschnitt VII wird im Folgenden mit Bezug auf Figur 7 im Detail eingegangen.

Figur 7 zeigt eine vergrößerte Ansicht der Ausschnitts VII in Figur 6.

Der wesentliche Unterschied zwischen dem in Figur 7 gezeigten Ausschnitt VII und den in Figur 6 gezeigten Ausschnitt VI liegt darin, dass zwischen dem ersten Kupplungsring 58 und dem zweiten Kupplungsring 60 eine Relativverdrehung stattgefunden hat. Durch diese Relativverdrehung wurden der erste Kupplungsring 58 und der zweite Kupplungsring 60 separiert und befinden sich gemäß Figur 7 nun in der Freilaufstellung wie insbesondere an den durch die Pfeile FS gekennzeichneten Stellen erkennbar ist.

Die Zähne 98 des ersten Kupplungsrings 58 und die Zähne 100 des zweiten Kupplungsrings 60 stehen nicht mehr in Eingriff miteinander, sodass sich die Freilaufnabe im Freilaufmodus befindet, in dem eine Relativdrehung zwischen der Nabenhülse 18 mit dem daran angebrachten Laufrad und der Antreiberhülse 24 stattfinden kann. Im Freilaufmodus dreht sich zumeist die Nabenhülse 18 mit dem daran angebrachten Laufrad schneller als die Antreiberhülse 24.

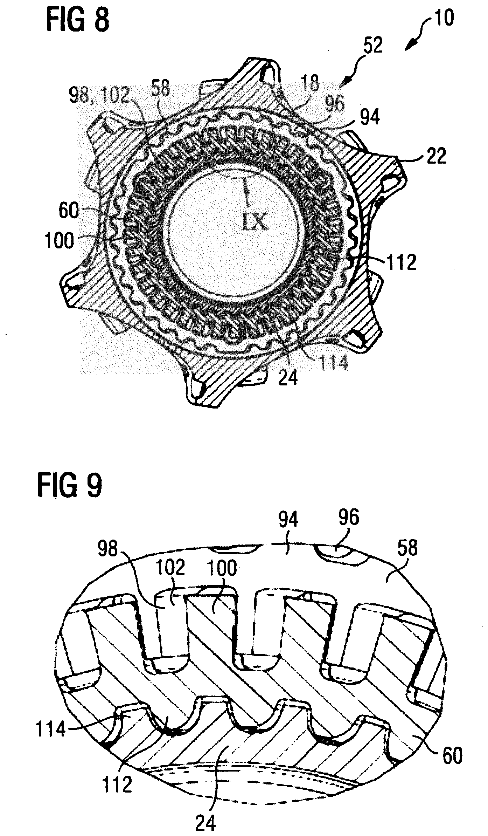

Figur 8 zeigt eine Schnittansicht der Freilaufnabe 10.

In Figur 8 sind die Radialverzahnungen 94 und 96 des ersten Kupplungsrings 58 und der Nabenhülse 18 erkennbar, die in Antriebsrichtung miteinander in drehmomentübertragenden Eingriff stehen. Die Zähne 100 des zweiten Kupplungsrings 60 stehen in Eingriff mit den Zähnen 98 des ersten Kupplungsrings 58. Von den Zähnen 98 des ersten Kupplungsrings 58 sind lediglich Ausschnitte der Gleitflächen 102 erkennbar. Der zweite Kupplungsring 60 weist eine Radialverzahnung 112 auf, die mit einer Radialverzahnung 114 an der Antreiberhülse 24 in drehmomentübertragenden Eingriff steht. Die Radialverzahnung 94 des ersten Kupplungsrings 58 und die Radialverzahnung 96 der Nabenhülse 18 sind in Umfangsrichtung schwingungstechnisch voneinander entkoppelt. Dazu wird im Freilaufmodus ein Luftspalt zwischen den Radialverzahnungen 94 und 96 eingestellt. Dieser Luftspalt wird von den in Figur 8 nicht gezeigten Führungshülsen eingestellt. In Antriebsrichtung liegen die Zähne der Radialverzahnungen 94 und 96 zur Drehmomentübertragung aneinander an, wie in Figur 8 erkennbar ist.

Figur 9 zeigt eine vergrößerte Ansicht des Ausschnitts IX in Figur 8.

Die Zähne 100 des zweiten Kupplungsrings 60 stehen mit den Zähnen 98 des ersten Kupplungsrings 58 in Eingriff. Die Radialverzahnungen 112 und 114 der Antreiberhülse 24 und des zweiten Kupplungsrings 60 stehen ebenfalls in drehmomentübertragenden Eingriff miteinander.

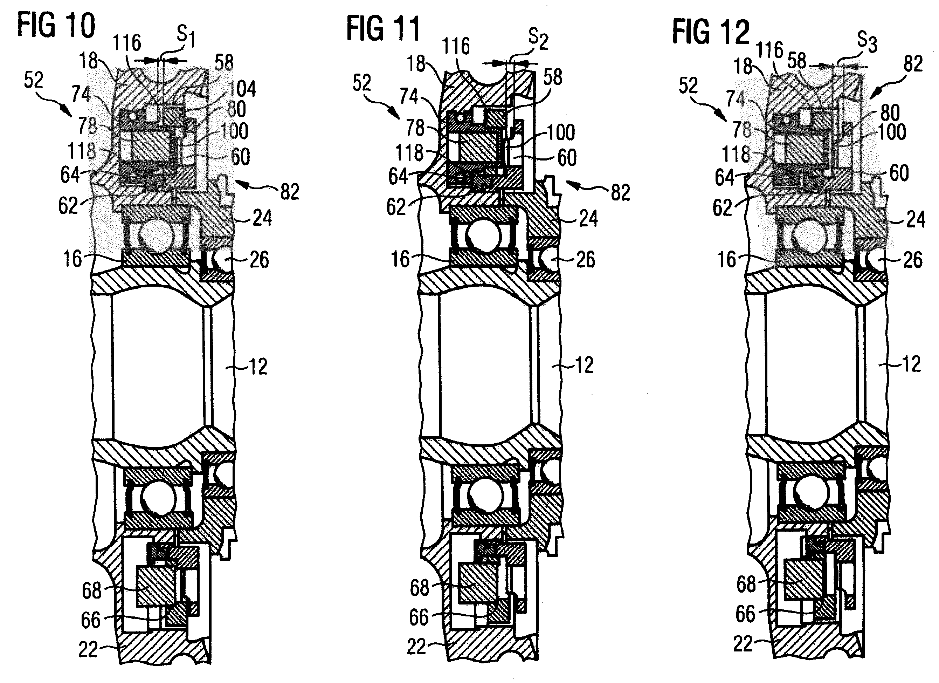

Im Folgenden wird mit Bezug auf die Figuren 10 bis 12 die Überführung der Freilaufeinrichtung 52 aus der Eingriffsstellung in die Freilaufstellung beschrieben.

Figur 10 zeigt die Freilaufeinrichtung 52 bzw. die Freilaufnabe in der Eingriffsstellung, d. h. die Kupplungsringe 58 und 60 stehen in drehmomentübertragenden Eingriff miteinander. An der Führungshülse 74 bzw. deren Führungsabschnitt 104 ist ein Absatz 116 ausgebildet. Zwischen diesem Absatz 116 und dem ersten Kupplungsring 58 stellt sich in der Eingriffsstellung der Kupplungsringe 58 und 60 ein vorbestimmter Spalt S₁ ein. In der Eingriffsstellung liegt der Entkopplungsring 62, der mit dem zweiten Kupplungsring 60 verbunden ist, an einer Anlagefläche 118 der Führungshülse 74 an. Der Entkopplungsring 62 gleitet mit seinem Innenumfang auf der Nabenhülse 18.

In der in Figur 10 gezeigten Stellung ist nur der Magnet 68 "aktiv". Das heißt, nur die Anziehungskraft des Magnets 68 wirkt auf die Kupplungsringe 58 und 60.

Um die Überführung aus der Eingriffsstellung in die Freilaufstellung der Freilaufeinrichtung auszulösen, muss eine Relativbewegung bzw. Relativverdrehung zwischen der Nabenhülse 18 und der Antreiberhülse 24 erfolgen. Durch diese Relativverdrehung zwischen der Nabenhülse 18 und der Antreiberhülse 24 können die Kupplungsringe 54 und 60 voneinander getrennt werden.

Figur 11 zeigt eine Zwischenstellung der Freilaufeinrichtung 52 zwischen der Eingriffsstellung und der Freilaufstellung. In dieser Zwischenstellung überlappen sich die Zähne der Kupplungsringe 58 und 60 noch bis zu einem bestimmten Grad.

In Figur 11 wurde der Spalt S₁ (Figur 10) geschlossen und der erste Kupplungsring 58 liegt an dem Absatz 116 an. Der Entkopplungsring 62 liegt noch immer an der Anlagefläche 118 an. Der erste Kupplungsring 58 hat sich dementsprechend verglichen mit Figur 10 nach links bewegt, um mit dem Absatz 116 in Anlage zu gelangen. Die Verlagerung des ersten Kupplungsrings 58 nach links zur Anlage an dem Absatz 118 an der Führungshülse 74 entsteht durch die Relativbewegung zwischen dem ersten Kupplungsring 58 und dem zweiten Kupplungsring 60 bei der die Gleitflächen 102 und 104 der Zähne 98 und 100 der Kupplungsringe 58 und 60 aneinander abgleiten (Figuren 4 bis 7). Durch diese Gleitbewegung wird der erste Kupplungsring 58 nach links verlagert, da der zweite Kupplungsring 60 aufgrund der Anziehungskraft der Magnete 78 in der Führungshülse 74 über den Entkopplungsring 62 in Anlage mit der Anlagefläche 118 der Führungshülse 74 gehalten wird. Die Bewegung des ersten Kupplungsrings 58 nach links findet gegen die Anziehungskraft der Magnete 68 in dem ersten Kupplungsring 58 statt, da die Magnete 68 mit ihrer Anziehungskraft versuchen, die Kupplungsringe 58 und 60 aneinander zu ziehen. Durch die Bewegung des ersten Kupplungsrings 58 nach links wird zwischen dem ersten Kupplungsring 58 und dem zweiten Kupplungsring 60 ein Spalt S₂ eingestellt, d. h. die Kupplungsringe 58 und 60 sind in axialer Richtung bereits teilweise getrennt.

Figur 12 zeigt die Freilaufeinrichtung 52 in der Freilaufstellung, d. h. der erste Kupplungsring 58 und der zweite Kupplungsring 60 befinden sich nicht in drehmomentübertragenden Eingriff.

Verglichen mit Figur 11 hat sich der axiale Abstand zwischen dem ersten Kupplungsring 58 und dem zweiten Kupplungsring 60 weiter vergrößert. In Figur 12 ist der größere Abstand nun mit S₃ bezeichnet. Die Axialverzahnungen 98, 100 des ersten Kupplungsrings 58 und des zweiten Kupplungsrings 60, von denen nur der Zahn 100 des zweiten Kupplungsrings 60 gezeigt ist, sind vollständig voneinander getrennt.

Bei einer vergleichenden Ansicht zwischen Figur 11 und Figur 12 wird erkennbar, dass sich der zweite Kupplungsring 60 mit dem Entkopplungsring 62 relativ zu dem ersten Kupplungsring 58 in Figur 12 nach rechts bewegt hat. Der erste Kupplungsring 58 befindet sich weiterhin an dem Absatz 116 der Führungshülse 74, aber der Entkopplungsring 62 liegt nicht mehr an der Anlagefläche 118 an. Dadurch stellt sich der Abstand s₃ zwischen dem ersten Kupplungsring 58 und dem zweiten Kupplungsring 60 ein.

In den Figuren 10 bis 12 ist ferner der radiale Vorsprung 64 an dem Entkopplungsring 62 erkennbar, der dazu dient, den ersten Kupplungsring 58 an der aus dem zweiten Kupplungsring 60 und dem Entkopplungsring 62 gebildeten Einheit zu halten, und dennoch eine Relativbewegung zwischen dem ersten Kupplungsring 58 und dem zweiten Kupplungsring 60 mit dem Entkopplungsring 62 zuzulassen. Der Vorsprung 64 und der zweite Kupplungsring 60 schließen den ersten Kupplungsring 58 zwischen sich ein.

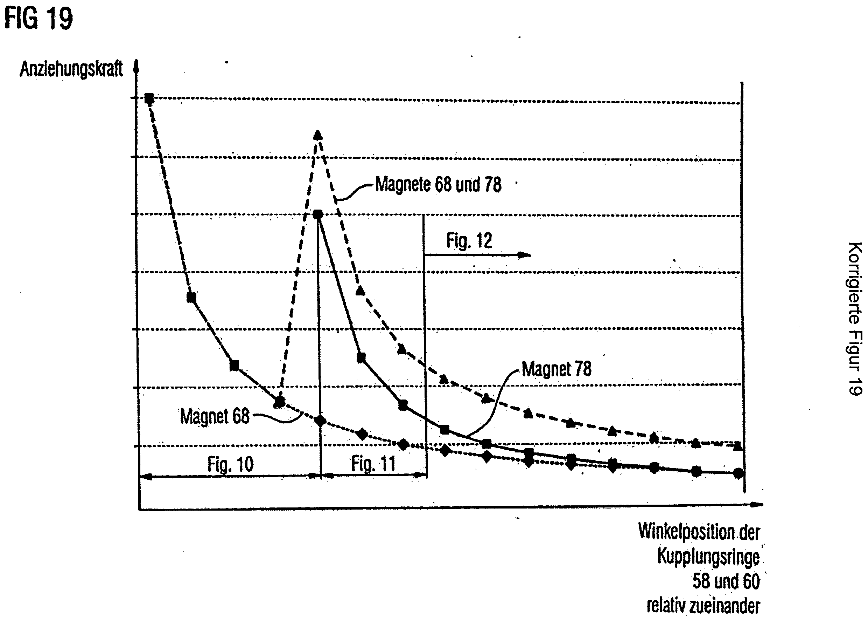

Ferner ist in den Figuren 10 bis 12 ersichtlich, dass durch die Führungshülse 74 mit ihrem Absatz 116 und der Anlagefläche 116 verhindert wird, dass die Kupplungsringe 58 und 60 direkt an der Nabenhülse 18 beim Übergang in die Freilaufstellung und auch zurück in die Eingriffsstellung anschlagen können. Hierzu wirkt die Führungshülse 74 auch mit dem Entkopplungsring 62 zusammen, der sich an der Anlagefläche 118 abstützen kann. Auf diese Weise wird verhindert, dass beim Übergang der Kupplungsringe in die Freilaufstellung oder zurück in die Eingriffsstellung entstehenden Schwingungen oder Vibrationen auf die Nabenhülse 18 übertragen werden können. Figur 19 zeigt ein Diagramm der sich in Abhängigkeit der Winkelpositionen der Kupplungsringe 58 und 60 verändernden Anziehungskräfte der Magnete 68 und 78.

Die einzelnen in Figur 19 gezeigten Kurven können den Anziehungskräften des Magnets 68, des Magnets 78 sowie beiden Magneten 68 und 78 in Abhängigkeit der in den Figuren 10 bis 12 gezeigten Stellungen der Kupplungsringe 58 und 60 zugeordnet werden.

In der in Figur 10 gezeigten Stellung wirkt nur der Magnet 68 an dem ersten Kupplungsring 58 mit seiner Anziehungskraft auf den zweiten Kupplungsring 60 und hält die Kupplungsringe 58 und 60 zunächst aneinander. Die Kurve der addierten Anziehungskräfte der Magnete 68 und 78 entspricht somit im Abschnitt "Figur 10" des Diagramms gemäß Figur 19 nur der von dem Magnet 68 bereitgestellten Anziehungskraft, da das Magnet 78 mit seiner Magnetkraft noch nicht auf die Kupplungsringe 58 und 60 einwirkt.

Werden die Kupplungsringe 58 und 60 beim Übergang in die Freilaufstellung relativ zueinander verdreht, fällt die auf den zweiten Kupplungsring 60 wirkende Anziehungskraft des Magnets 68.

In der in Figur 11 gezeigten Zwischenstellung sind die Kupplungsringe 58 und 60 derart relativ zueinander verdreht worden, dass auch das Magnet 78 mit einer relativ großen Anziehungskraft auf die Kupplungsringe 58 und 60 wirkt (siehe Bereich "Figur 11" in Figur 19). Dementsprechend ist auch die von beiden Magneten 68 und 78 bereitgestellte Anziehungskraft zunächst im Abschnitt "Figur 11" wieder relativ groß.

Die Anziehungskraft der Magnete 68 und 78 fällt dann jedoch relativ stark ab, je weiter die Kupplungsringe 58 und 60 zueinander verdreht werden. Die Kupplungsringe 58 und 60 werden von beiden Magneten 68 und 78 aneinander gehalten, obwohl der erste Kupplungsring 58 in Figur 11 nach links verlagert wurde und sich an den Absatz 116 anlegt. Dadurch wird der Spalt s₂ (Figur 11) zwischen dem ersten Kupplungsring 58 und dem zweiten Kupplungsring 60 gebildet. Die Kupplungsringe 58 und 60 sind somit in axialer Richtung bereits teilweise getrennt (siehe Spalt s₂).

Werden die Kupplungsringe 58 und 60 weiter zueinander verdreht und damit der axiale Abstand (Spalt s₃) zwischen den beiden Kupplungsringen 58 und 60 vergrö-βert, verringert sich sowohl die Anziehungskraft des Magnets 68 als auch die Anziehungskraft des Magnets 78 wie in dem mit "Figur 12" gekennzeichneten Abschnitt des Diagramms gemäß Figur 19 erkennbar ist. Die Anziehungskräfte der Magnete 68 und 78 sinken entsprechend weiter bis die Kupplungsringe 58 und 60 eine vorbestimmte Winkelposition relativ zueinander erreichen. In dieser vorbestimmten Winkelposition der Kupplungsringe 58 und 60 sind die Kupplungsringe 58 und 60 auch vollständig in axialer Richtung getrennt. Dies entspricht dem in Figur 12 gezeigten Zustand. In Figur 12 wurde der Entkopplungsring 62 von der Anlagefläche 118 an der Führungshülse 74 abgehoben, so dass der Spalt s₃ zwischen den Kupplungsringen 58 und 60 gebildet wird. In Figur 12 sind die beiden Kupplungsringe vollständig voneinander getrennt. Damit befindet sich die Freilaufeinrichtung 52 in der Freilaufstellung.

Aus Figur 19 wird ersichtlich, dass sich die Anziehungskräfte der Magnete 68 und 78 in Abhängigkeit der Winkelpositionen der Kupplungsringe 58 und 60 relativ zueinander verändert.

Die Freilaufeinrichtung 52 gewährleistet hohe magnetische Anziehungskräfte, die die Kupplungsringe 58 und 60 aneinander halten, lässt aber gleichzeitig durch den starken Abfall der Anziehungskräfte der Magnete 68 und 78 (siehe Figur 19) bei sich verändernden Winkelpositionen der Kupplungsringe 58 und 60 eine schnelle Trennung der Kupplungsringe 58 und 60 zum Übergang in die Freilaufstellung zu.

Zu berücksichtigen hierbei gilt es, dass auch in der Freilaufstellung (Figur 12) in Abhängigkeit der Winkelpositionen der Kupplungsringe 58 und 60 relativ zueinander nahezu die in Figur 19 gezeigten hohen Anziehungskräfte auf den zweiten Kupplungsring 60 wirken, wobei die Anziehungskräfte aufgrund des axialen Abstands zwischen den Kupplungsringen in der Freilaufstellung etwas geringer als die dargestellten Anziehungskräfte sind. Durch diese relativen großen Anziehungskräfte wird erreicht, dass die Kupplungsringe 58 und 60 auch aus der Freilaufstellung schnell wieder zurück in die Eingriffsstellung überführt werden können, in der sie in drehmomentübertragenden Eingriff miteinander stehen. Anders ausgedrückt wirken in vorbestimmten Winkelpositionen der Kupplungsringe 58 und 60 relativ zueinander große Anziehungskräfte auf den zweiten Kupplungsring 60 und in anderen vorbestimmten Winkelpositionen geringere Anziehungskräfte. Dies wirkt sich bei einer kontinuierlichen Relativverdrehung der Kupplungsringe 58 und 60 in der Freilaufstellung derart aus, dass die in Figur 19 gezeigten Kurven oder ähnliche Kurven der Anziehungskräfte in großer Anzahl hintereinander auftreten, wenn sich die Kupplungsringe 58 und 60 in der Freilaufstellung zueinander verdrehen können.

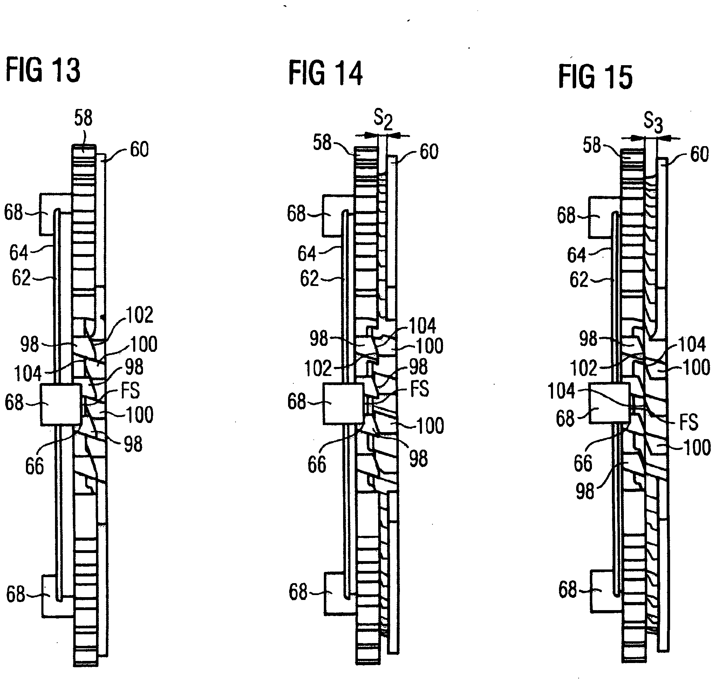

Die Figuren 13 bis 15 zeigen Ansichten des ersten Kupplungsrings 58 und des zweiten Kupplungsrings 60 mit dem Entkopplungsring 62 beim Übergang aus der Eingriffsstellung in die Freigabestellung. Die Stellungen der Kupplungsringe 58 und 60 in den Figuren 13 bis 15 entsprechen im Wesentlichen den in den Figuren 10 bis 12 gezeigten Stellungen der Freilaufeinrichtung 52.

In Figur 13 ist der erste Kupplungsring 58 mit den Magneten 68 erkennbar. Die Magnete 68 sind in Durchbrüchen 66 in dem ersten Kupplungsring 58 aufgenommen. Die Durchbrüche 66 sind in dem ersten Kupplungsring 58 zwischen zwei benachbarten Zähnen 98 ausgebildet. Die Zähne 98 des ersten Kupplungsrings 58 werden in ihrer Funktion durch die Durchbrüche 66 bzw. die Magnete 68 nicht beeinträchtigt.
Der zweite Kupplungsring 60 ist mit dem Entkopplungsring 62 verbunden. Der Entkopplungsring 62 weist einen umlaufenden Vorsprung 64 auf, der den ersten Kupplungsring 58 an der Einheit aus Entkopplungsring 62 und zweitem Kupplungsring 60 hält.

Die Zähne 98 des ersten Kupplungsrings 58 weisen eine Gleitfläche 102 auf. Die Zähne 100 des zweiten Kupplungsrings 60 weisen in ähnlicher Weise eine Gleitfläche 104 auf. In der in Figur 13 gezeigten Eingriffsstellung überspannt eine Gleitfläche 102, 104 eines Zahns 98 oder 100 im Wesentlichen den Zwischenraum zwischen zwei benachbarten Zähnen 98 oder 100. Ein Zahn 100 überspannt mit seiner Gleitfläche 104 dementsprechend auch den Flächenabschnitt FS des Magnets 68, der durch den Durchbruch 66 zwischen zwei benachbarten Zähnen 98 freigelegt wird. Anders ausgedrückt entspricht der von dem Durchbruch 66 freigelegte Flächenabschnitt FS des in dem Durchbruch 66 aufgenommenen Magnets 68 flächenmäßig im Wesentlichen der Gleitfläche 104 des Zahns 100 des zweiten Kupplungsrings 60.

Figur 14 zeigt eine Zwischenstellung zwischen der Eingriffsstellung und der Freilaufstellung.

Gemäß Figur 14 fand eine Relativbewegung in axialer Richtung und gleichzeitig eine Relativverdrehung zwischen dem ersten Kupplungsring 58 und dem zweiten Kupplungsring 60 statt. Dies geschieht beispielsweise dann, wenn sich die Nabenhülse 18 (Figur 1) mit dem ersten Kupplungsring 58 schneller dreht als die Antreiberhülse 24 (Figur 1) mit dem zweiten Kupplungsring 60. Anders ausgedrückt wird in den meisten Fällen, in denen die Freilaufnabe 10 in den Freilaufmodus übergeht, keine Kraft über den Kettentrieb auf die Antriebshülse 24 übertragen - der Kettentrieb steht still -, wobei sich die Nabenhülse mit dem ersten Kupplungsring 58 weiterhin dreht. Durch diese Relativverdrehung zwischen dem ersten Kupplungsring 58 und dem zweiten Kupplungsring 60 gleiten die Gleitflächen 102 und 104 der Zähne 98 und 100 aneinander ab. Durch die Neigung der Gleitflächen 102 und 104 werden die Kupplungsringe 58 und 60 bei einer entsprechenden Relativverdrehung und dem Abgleiten der Gleitflächen 102 und 104 aneinander in axialer Richtung separiert. Der sich vergrößernde axiale Abstand zwischen dem ersten Kupplungsring 58 und dem zweiten Kupplungsring 60 ist in Figur 14 wiederum durch s₂ gekennzeichnet. In der in Figur 14 gezeigten Stellung befindet sich kein Zahn 100 des zweiten Kupplungsrings 60 in axialer Richtung vor dem Flächenabschnitt FS des Magnets 68. Die von dem Magnet 68 in dem ersten Kupplungsring 58 auf den zweiten Kupplungsring 60 ausgeübte magnetische Anziehungskraft ist dementsprechend gering. Befindet sich ein Zahn 100 mit seiner Gleitfläche 104 unmittelbar vor dem Flächenabschnitt FS ist die auf den Zahn 100 ausgeübte magnetische Anziehungskraft des Magnets 68 relativ groß. Daraus wird ersichtlich, dass die von dem Magneten 68 in dem ersten Kupplungsring 58 auf den zweiten Kupplungsring 60 ausgeübte magnetische Anziehungskraft sich in Abhängigkeit der Winkelpositionen des ersten Kupplungsrings 58 und des zweiten Kupplungsrings 60 relativ zueinander verändert. Dies liegt darin begründet, dass die Feldlinien des Magnetfelds der Magnete 68 nur aus dem Flächenabschnitt FS ungehindert in Richtung des zweiten Kupplungsrings 60 austreten können. In allen anderen Bereichen muss sich das Magnetfeld zunächst durch die benachbarten Zähne 98 des Kupplungsrings 58 ausbreiten und ist dementsprechend schwächer.

Figur 15 zeigt den ersten Kupplungsring 58 und den zweiten Kupplungsring 60 in der Freilaufstellung. Der Abstand s₃ zwischen dem ersten Kupplungsring 58 und dem zweiten Kupplungsring 60 hat sich verglichen mit dem Abstand s₂ gemäß Figur 14 weiter vergrößert. Der erste Kupplungsring 58 liegt nahezu an dem radialen Vorsprung 64 des Entkopplungsrings 62 an. Die Gleitflächen 102 und 104 sind weiter aneinander abgeglitten, wodurch der erste Kupplungsring 58 und der zweite Kupplungsring 60 in axialer Richtung weiter voneinander beabstandet sind (siehe s₃). In Figur 15 wird erkennbar, dass sich ein Zahn 100 des zweiten Kupplungsrings 60, wenngleich in axialer Richtung voneinander beabstandet, in axialer Richtung vor dem Flächenabschnitt FS des Magnets 68 befindet. In dieser Stellung der Kupplungsringe 58 und 60 ist die von dem Magnet 68 auf den Zahn 100 ausgeübte magnetische Anziehungskraft wiederum sehr groß, da der Zahn 100 bzw. seine Gleitfläche 104 mit dem Flächenabschnitt FS des Magnets 68, der von dem Durchbruch 66 freigelegt wird, nahezu vollständig überlappt. In diesem Fall kann das Magnetfeld aus dem Flächenabschnitt FS unmittelbar auf den Zahn 100 des zweiten Kupplungsrings 60 wirken.

Dies hat den Vorteil, dass der Übergang aus der in Figur 15 gezeigten Freilaufstellung in die in Figur 13 gezeigte Eingriffsstellung aufgrund der hohen von den Magneten 68 auf die Zähne 100 des zweiten Kupplungsrings 60 ausgeübten Anziehungskraft schnell ablaufen kann. Bei einer Relativverdrehung zwischen dem ersten Kupplungsring 58 und dem zweiten Kupplungsring 60 kann die auf den zweiten Kupplungsring 60 wirkende Anziehungskraft der Magnete 68 quasi an- und ausgeschalten werden. Wie voranstehend ausgeführt wurde, liegt dies darin begründet, dass sich das Magnetfeld durch die verschiedenen Winkelpositionen des ersten Kupplungsrings 58 relativ zu dem zweiten Kupplungsrings 60 verändern kann. In der in Figur 15 gezeigten Winkelposition der Kupplungsringe 58 und 60 wirkt eine große Anziehungskraft auf den Zahn 100 des zweiten Kupplungsring, da der Zahn 100 vollständig mit dem Flächenabschnitt FS überlappt und das Magnetfeld direkt auf den Zahn 100 wirken kann. Durch die in dieser Winkelposition starke Anziehungskraft wird bei einer Relativverdrehung in entgegengesetzter Richtung zwischen dem ersten Kupplungsring 58 und dem zweiten Kupplungsring 60 sichergestellt, dass der axiale Abstand zwischen dem ersten Kupplungsring 58 und dem zweiten Kupplungsring 60 geschlossen wird und die Zähne 98 und 100 schnell und zuverlässig miteinander in Eingriff gelangen.

Betrachtet man die Figuren 13 bis 15 in umgekehrter Reihenfolge, zeigen die Figuren 13 bis 15 auch den Übergang aus der Freilaufstellung gemäß Figur 15 in die Eingriffsstellung gemäß Figur 13. Anders ausgedrückt werden bei einer umgekehrten Relativverdrehung die Kupplungsringe 58 und 60 durch die Magnete 68 aneinander gezogen. Die Gleitflächen 102 und 104 der Zähne 98 und 100 gleiten aneinander ab und bis sie sich in vollständigen und drehmomentübertragenden Eingriff befinden.

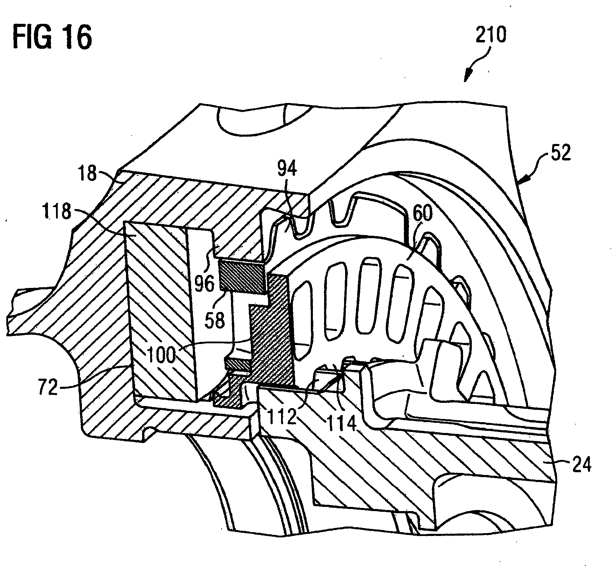

Figur 16 zeigt eine teilweise aufgebrochene perspektivische Ansicht einer Freilaufnabe 210 gemäß einer zweiten Ausführungsform der Erfindung.

Für gleichartige oder gleichwirkende Komponenten werden dieselben Bezugszeichen wie bei der ersten Ausführungsform verwendet.

Die Freilaufnabe 210 weist eine Nabenhülse 18 und eine Antreiberhülse 24 auf. Zwischen der Nabenhülse 18 und der Antreiberhülse 24 ist die Freilaufeinrichtung 52 vorgesehen. Die Freilaufeinrichtung 52 umfasst den ersten Kupplungsring 58 und den zweiten Kupplungsring 60. Die Antreiberhülse 24 steht über ihre Radialverzahnung 112 mit der Radialverzahnung 114 des zweiten Kupplungsrings 60 in drehmomentübertragenden Eingriff. Gleiches gilt für die Nabenhülse 18 und den ersten Kupplungsring 58. Die Nabenhülse 18 weist eine nach radial innen weisende Radialverzahnung 96 auf, die in drehmomentübertragenden Eingriff mit der nach radial außen weisenden Radialverzahnung 94 des ersten Kupplungsrings 58 steht.

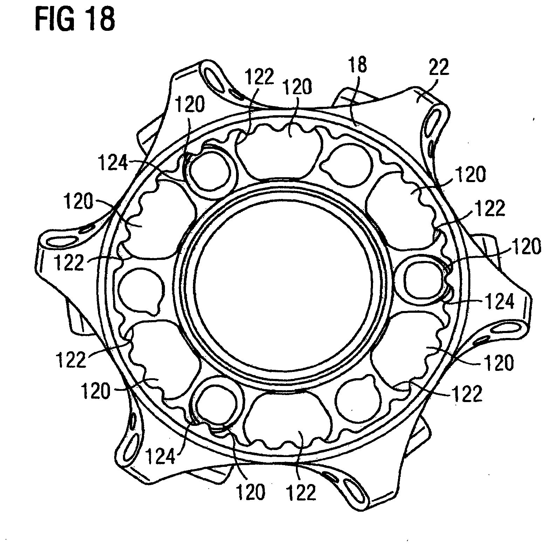

Die Nabenhülse 18 weist ferner Ausnehmungen 72 auf. In den Ausnehmungen 72 ist in Figur 18 ein schallreduzierendes Element 120 aufgenommen. Die schallreduzierenden Elemente 120 können schallabsorbierende Elemente oder schalldämpfende Elemente sein. Die schallabsorbierenden Elemente 120 können einfach in die Ausnehmung 72 eingepresst werden.

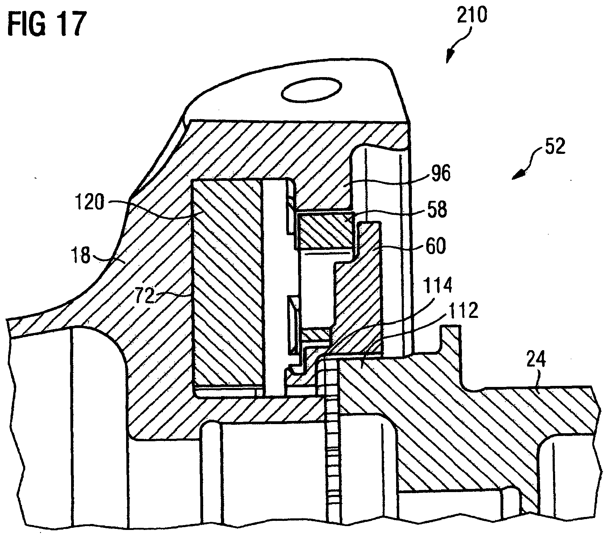

Figur 17 zeigt eine Schnittansicht der Freilaufnabe 210. In der Ansicht gemäß Figur 17 ist erneut das schallabsorbierende bzw. schalldämpfende Element 120 erkennbar, das in der Ausnehmung 72 in der Nabenhülse 18 aufgenommen ist. Das Element 120 zur Schalldämpfung bzw. zur Schallabsorption befindet sich in unmittelbarer Nähe des ersten Kupplungsrings 58 und des zweiten Kupplungsrings 60, die bei der Überführung aus der Freilaufstellung in die Eingriffsstellung unangenehme Geräusche von sich geben können. Diese Geräusche werden von dem schallabsorbierenden bzw. schalldämpfenden Element 120 absorbiert bzw. gedämpft und dringen so nicht nach außen um den Fahrer und seine Umgebung störend zu beeinflussen.

Figur 18 zeigt eine Vorderansicht einer Nabenhülse 18 mit dem daran vorgesehenen Speichenflansch 22. Die Nabenhülse 18 weist verschiedene Ausnehmungen 122 und 124 auf. Die Ausnehmungen 122 sind oval ausgebildet. Die Ausnehmungen 124 sind ringförmig ausgebildet. In die Ausnehmungen 122 und 124 werden schallabsorbierende bzw. schalldämpfende Elemente 120 eingepresst, die an die Form der jeweiligen Ausnehmung angepasst sind.

## Patentansprüche

1. Freilaufnabe (10) für ein Fahrrad umfassend:
- eine Nabenachse (12),
- eine Nabenhülse (18), die über eine Lageranordnung (14, 16) drehbar auf der Nabenachse (12) gelagert ist,
- einen Antreiber (24), der drehbar auf der Nabenachse (12) gelagert und mit wenigstens einer Ritzelanordnung verbindbar ist,
- eine Freilaufeinrichtung (52), die zwischen der Nabenhülse (18) und dem Antreiber (24) angeordnet ist und wahlweise eine Relativverdrehung zwischen der Nabenhülse (18) und dem Antreiber (24) zulässt oder die Nabenhülse (18) und den Antreiber (24) drehmomentübertragend koppelt,
wobei die Freilaufeinrichtung (52) wenigstens einen ersten Kupplungsring (58) und wenigstens einen zweiten Kupplungsring (60) aufweist, wobei der erste Kupplungsring (58) drehmomentübertragend mit der Nabenhülse (18) gekoppelt oder koppelbar ist, und wobei der zweite Kupplungsring (60) drehmomentübertragend mit dem Antreiber (24) koppelbar oder gekoppelt ist, wobei die beiden Kupplungsringe (58, 60) einander zugewandte Verzahnungen (98, 100) aufweisen, und wobei der erste und der zweite Kupplungsring (58) axial relativ zur Nabenachse (12) zwischen einer Eingriffsstellung (ES), in der die Verzahnungen (98, 100) drehmomentübertragend ineinander eingreifen, und einer Freilaufstellung (FS) verlagerbar sind, in der die Verzahnungen (98, 100) nicht ineinander eingreifen,
**dadurch gekennzeichnet, dass** wenigstens eine in Durchbrüchen (66) in dem ersten Kupplungsring (58) oder dem zweiten Kupplungsring (60) aufgenommene Magnetanordnung (68) die Kupplungsringe (58, 60) in der Eingriffsstellung (ES) hält, wobei die Durchbrüche (66) zur Aufnahme der Magnetanordnung (68) in dem ersten Kupplungsring (58) oder dem zweiten Kupplungsring (60) derart angeordnet und ausgebildet sind, dass bei einer Relativverdrehung zwischen erstem und zweitem Kupplungsring (58, 60) die Kupplungsringe (58, 60) in axialer Richtung aus der Eingriffsstellung (ES) in die Freilaufstellung (FS) und zurück überführbar sind.

2. Freilaufnabe (10) nach Anspruch 1,
wobei die Durchbrüche (66) in dem ersten Kupplungsring (58) oder dem zweiten Kupplungsring (60) derart ausgebildet und angeordnet sind, dass ein Zahn (98, 100) der axialen Verzahnung (98,100) des zweiten Kupplungsrings (58) oder des ersten Kupplungsrings (60) in der Eingriffsstellung einen von dem Durchbruch (66) freigelegten Flächenabschnitt (FS) des in dem Durchbruch aufgenommenen Magnets (66) überdeckt.

3. Freilaufnabe (10) nach Anspruch 1 oder 2,
wobei die Durchbrüche (66) in dem ersten Kupplungsring (58) oder in dem zweiten Kupplungsring (60) zumindest abschnittsweise zwischen zwei benachbarten Zähnen (98, 100) der axialen Verzahnung (98, 100) des ersten Kupplungsrings (58) oder des zweiten Kupplungsrings (60) ausgebildet sind, wobei der in dem jeweiligen Durchbruch (66) aufgenommene Magnet (68) den Bereich zwischen benachbarten Zähnen (98) überspannt, der im Wesentlichen einem Zahn (98, 100) des zweiten Kupplungsrings (60) oder des ersten Kupplungsrings (58) in der Eingriffsstellung entspricht.

4. Freilaufnabe (10) nach Anspruch 3,
wobei der von dem Durchbruch (66) freigelegte Flächenabschnitt (FS) des in dem Durchbruch (66) aufgenommenen Magnets (68) flächenmäßig im Wesentlichen einer Gleitfläche (102, 104) eines Zahns (98, 100) des zweiten Kupplungsrings (58) oder des zweiten Kupplungsrings (60) entspricht.

5. Freilaufnabe (10) nach einem der Ansprüche 1 bis 4,
wobei an der Nabenhülse (18) wenigstens eine Führungshülse (74) vorgesehen ist, die zur Führung des ersten und/oder des zweiten Kupplungsrings (58, 60) in Richtung der Nabenachse (18) und zur schwingungstechnischen Entkopplung der Nabenhülse (18) von der Freilaufeinrichtung (52) in Umfangsrichtung dient.

6. Freilaufnabe (10) nach Anspruch 5,
wobei wenigstens ein Magnet (78) in der wenigstens einen Führungshülse (74) aufgenommen ist.

7. Freilaufnabe (10) nach Anspruch 5 oder 6,
wobei zumindest der erste Kupplungsring (58) wenigstens eine Ausnehmung (80) zur Aufnahme der wenigstens einen Führungshülse (74) aufweist.

8. Freilaufnabe (10) nach einem der Ansprüche 5 bis 7,
wobei die wenigstens Führungshülse (74) schwingungsdämpfend an der Nabenhülse (18) gelagert ist.

9. Freilaufnabe (10) nach einem der Ansprüche 5 bis 8,
wobei die wenigstens eine Führungshülse (74) einen vorbestimmten Luftspalt zwischen dem in ihr aufgenommenen Magnet (78) und den Kupplungsringen (58, 60) einstellt.

10. Freilaufnabe (10) nach einem der Ansprüche 7 bis 9,
wobei die wenigstens eine Ausnehmung (80) in dem ersten Kupplungsring (58) zur Aufnahme der wenigstens einen Führungshülse (74) derart ausgebildet und angeordnet sind, dass die wenigstens eine Ausnehmung (80) in der Eingriffsstellung von einem Zahn (100) des zweiten Kupplungsrings (60) zumindest abschnittweise überdeckt sind.

11. Freilaufnabe (10) nach einem der Ansprüche 5 bis 10,
wobei mit der wenigstens einen Führungshülse (74) ein vorbestimmtes Spiel zwischen einer Radialverzahnung (96) der Nabenhülse (18) und einer Radialverzahnung (94) zumindest des ersten Kupplungsrings (58) einstellbar ist.

12. Freilaufnabe (10) nach einem der Ansprüche 1 bis 11,
wobei die von der wenigstens einen Magnetanordnung (68) bereitgestellte Anziehungskraft in Abhängigkeit der Winkelpositionen des ersten Kupplungsrings (58) und des zweiten Kupplungsrings (60) relativ zueinander veränderbar ist.

13. Freilaufnabe (10) nach einem der Ansprüche 6 bis 12,
wobei die von dem wenigstens einen Magnet (78) in der wenigstens einen Führungshülse (74) bereitgestellte Anziehungskraft in Abhängigkeit der Winkelpositionen des ersten Kupplungsrings (58) und des zweiten Kupplungsrings (60) relativ zueinander veränderbar ist.

14. Freilaufnabe (10) nach Anspruch 12 oder 13,
wobei der erste Kupplungsring (58) und der zweite Kupplungsring (60) derart ausgebildet sind, dass in zumindest einer vorbestimmten Winkelposition des ersten Kupplungsrings (58) relativ zum zweiten Kupplungsring (60) ausschließlich die Anziehungskraft der wenigstens einen Magnetanordnung (68) auf den zweiten Kupplungsring (60) wirkt.

15. Freilaufnabe (10) nach einem der Ansprüche 12 bis 14,
wobei der erste Kupplungsring (58) und der zweite Kupplungsring (60) derart ausgebildet sind, dass in zumindest einer vorbestimmten Winkelposition des ersten Kupplungsrings (58) relativ zum zweiten Kupplungsring (60) die Anziehungskräfte der wenigstens einen Magnetanordnung (68) und des wenigstens einen Magnets (78) in der wenigstens einen Führungshülse (74) zusammen auf den zweiten Kupplungsring (60) wirken.

16. Freilaufnabe (10) nach einem der Ansprüche 1 bis 15,
wobei der erste Kupplungsring (58) und/oder der zweite Kupplungsring (60) über wenigstens ein Entkopplungselement (62) von der Nabenhülse (18) zumindest in axialer schwingungstechnisch entkoppelbar sind.

17. Freilaufnabe (10) nach einem der Ansprüche 5 bis 16,
wobei die wenigstens eine Führungshülse (74) wenigstens einen Anschlag (116) für den ersten Kupplungsring (58) aufweist.

18. Freilaufnabe (10) nach einem der Ansprüche 5 bis 17,
wobei die wenigstens eine Führungshülse (74) wenigstens eine Anlagefläche (118) zur Anlage des wenigstens eines Entkopplungselements (62) aufweist.

## Claims

1. Freewheel hub (10) for a bicycle, comprising:
- a hub axle (12),
- a hub sleeve (18) which is mounted rotatably on the hub axle (12) via a bearing arrangement (14, 16),
- a driver (24) which is mounted rotatably on the hub axle (12) and is connectable to at least one pinion arrangement,
- a freewheel device (52) which is arranged between the hub sleeve (18) and the driver (24) and optionally allows relative rotation between the hub sleeve (18) and the driver (24) or couples the hub sleeve (18) and the driver (24) in a torque-transmitting manner,
wherein the freewheel device (52) has at least one first clutch ring (58) and at least one second clutch ring (60), wherein the first clutch ring (58) is coupled or couplable to the hub sleeve (18) in a torque-transmitting manner, and wherein the second clutch ring (60) is couplable or coupled to the driver (24) in a torque-transmitting manner, wherein the two clutch rings (58, 60) have mutually facing toothing systems (98, 100), and wherein the first and the second clutch ring (58) are displaceable axially relative to the hub axle (12) between an engaged position (ES), in which the toothing systems (98, 100) engage into one another in a torque-transmitting manner, and a freewheel position (FS), in which the toothing systems (98, 100) do not engage into one another,
**characterized in that** at least one magnet arrangement (68) accommodated in apertures (66) in the first clutch ring (58) or the second clutch ring (60) keeps the clutch rings (58, 60) in the engaged position (ES), wherein the apertures (66) for accommodating the magnet arrangement (68) are arranged and configured in the first clutch ring (58) or the second clutch ring (60) such that, in the event of relative rotation between the first and second clutch rings (58, 60), the clutch rings (58, 60) are transferable in the axial direction from the engaged position (ES) into the freewheel position (FS) and back again.

2. Freewheel hub (10) according to Claim 1,
wherein the apertures (66) in the first clutch ring (58) or the second clutch ring (60) are configured and arranged such that a tooth (98, 100) of the axial toothing system (98, 100) of the second clutch ring (60) or of the first clutch ring (58) covers a surface portion (FS), exposed by the aperture (66), of the magnet (66) accommodated in the aperture in the engaged position.

3. Freewheel hub (10) according to Claim 1 or 2, wherein the apertures (66) in the first clutch ring (58) or in the second clutch ring (60) are configured at least in sections between two adjacent teeth (98, 100) of the axial toothing system (98, 100) of the first clutch ring (58) or of the second clutch ring (60), wherein the magnet (68) accommodated in the respective aperture (66) spans the region between adjacent teeth (98), said region corresponding substantially to a tooth (98, 100) of the second clutch ring (60) or of the first clutch ring (58) in the engaged position.

4. Freewheel hub (10) according to Claim 3,
wherein the surface portion (FS), exposed by the aperture (66), of the magnet (68) accommodated in the aperture (66) corresponds in terms of area substantially to a sliding surface (102, 104) of a tooth (98, 100) of the second clutch ring (58) or of the second clutch ring (60) .

5. Freewheel hub (10) according to one of Claims 1 to 4,
wherein at least one guide sleeve (74) is provided on the hub sleeve (18), said guide sleeve (74) serving to guide the first and/or the second clutch ring (58, 60) in the direction of the hub axle (18) and to decouple the hub sleeve (18) from the freewheel device (52) in terms of vibration in the circumferential direction.

6. Freewheel hub (10) according to Claim 5,
wherein at least one magnet (78) is accommodated in the at least one guide sleeve (74).

7. Freewheel hub (10) according to Claim 5 or 6, wherein at least the first clutch ring (58) has at least one recess (80) for accommodating the at least one guide sleeve (74).

8. Freewheel hub (10) according to one of Claims 5 to 7,
wherein the at least one guide sleeve (74) is mounted in a vibration-damping manner on the hub sleeve (18).

9. Freewheel hub (10) according to one of Claims 5 to 8,
wherein the at least one guide sleeve (74) sets a predetermined air gap between the magnet (78) accommodated therein and the clutch rings (58, 60).

10. Freewheel hub (10) according to one of Claims 7 to 9,
wherein the at least one recess (80) in the first clutch ring (58) for accommodating the at least one guide sleeve (74) is configured and arranged such that the at least one recess (80) is covered at least in sections by a tooth (100) of the second clutch ring (60) in the engaged position.

11. Freewheel hub (10) according to one of Claims 5 to 10,
wherein a predetermined clearance between a radial toothing system (96) of the hub sleeve (18) and a radial toothing system (94) at least of the first clutch ring (58) is settable with the at least one guide sleeve (74).

12. Freewheel hub (10) according to one of Claims 1 to 11,
wherein the attractive force provided by the at least one magnet arrangement (68) is variable depending on the angular positions of the first clutch ring (58) and of the second clutch ring (60) relative to one another.

13. Freewheel hub (10) according to one of Claims 6 to 12,
wherein the attractive force provided by the at least one magnet (78) in the at least one guide sleeve (74) is variable depending on the angular positions of the first clutch ring (58) and of the second clutch ring (60) relative to one another.

14. Freewheel hub (10) according to Claim 12 or 13, wherein the first clutch ring (58) and the second clutch ring (60) are configured such that, in at least one predetermined angular position of the first clutch ring (58) relative to the second clutch ring (60), only the attractive force of the at least one magnet arrangement (68) acts on the second clutch ring (60).

15. Freewheel hub (10) according to one of Claims 12 to 14,
wherein the first clutch ring (58) and the second clutch ring (60) are configured such that, in at least one predetermined angular position of the first clutch ring (58) relative to the second clutch ring (60), the attractive forces of the at least one magnet arrangement (68) and of the at least one magnet (78) in the at least one guide sleeve (74) jointly act on the second clutch ring (60).

16. Freewheel hub (10) according to one of Claims 1 to 15,
wherein the first clutch ring (58) and/or the second clutch ring (60) can be decoupled from the hub sleeve (18) in terms of vibration at least in the axial direction via at least one decoupling element (62).

17. Freewheel hub (10) according to one of Claims 5 to 16,
wherein the at least one guide sleeve (74) has at least one stop (116) for the first clutch ring (58).

18. Freewheel hub (10) according to one of Claims 5 to 17,
wherein the at least one guide sleeve (74) has at least one abutment surface (118) for the abutment of the at least one decoupling element (62).

## Revendications

1. Moyeu à roue libre (10) pour un vélo, comprenant :
- un axe de moyeu (12),
- une douille de moyeu (18) qui est montée à rotation sur l'axe de moyeu (12) par le biais d'un ensemble de paliers (14, 16),
- un dispositif d'entraînement (24) qui est monté à rotation sur l'axe de moyeu (12) et peut être relié à au moins un ensemble de pignons,
- un dispositif de roue libre (52) qui est disposé entre la douille de moyeu (18) et le dispositif d'entraînement (24) et autorise sélectivement une rotation relative entre la douille de moyeu (18) et le dispositif d'entraînement (24) ou accouple la douille de moyeu (18) et le dispositif d'entraînement (24) de manière à transmettre un couple,
le dispositif de roue libre (52) présentant au moins une première bague d'embrayage (58) et au moins une deuxième bague d'embrayage (60), la première bague d'embrayage (58) étant accouplée ou pouvant être accouplée à la douille de moyeu (18) de manière à transmettre un couple, et la deuxième bague d'embrayage (60) étant accouplée ou pouvant être accouplée au dispositif d'entraînement (24) de manière à transmettre un couple, les deux bagues d'embrayage (58, 60) présentant des dentures (98, 100) tournées l'une vers l'autre, et la première et la deuxième bague d'embrayage (58) étant déplaçables axialement par rapport à l'axe de moyeu (12) entre une position d'engrènement (ES), dans laquelle les dentures (98, 100) s'engrènent l'une dans l'autre de manière à transmettre un couple, et une position de roue libre (FS), dans laquelle les dentures (98, 100) ne s'engrènent pas l'une dans l'autre,
**caractérisé en ce qu'**au moins un ensemble d'aimants (68) logé dans des ouvertures (66) dans la première bague d'embrayage (58) ou la deuxième bague d'embrayage (60) maintient les bague d'embrayage (58, 60) dans la position d'engrènement (ES), les ouvertures (66) servant au logement de l'ensemble d'aimants (68) dans la première bague d'embrayage (58) ou la deuxième bague d'embrayage (60) étant disposées et formées de telle sorte que, lors d'une rotation relative entre les première et deuxième bagues d'embrayage (58, 60), les bagues d'embrayage (58, 60) peuvent être transférées dans la direction axiale de la position d'engrènement (ES) à la position de roue libre (FS) et inversement.

2. Moyeu à roue libre (10) selon la revendication 1, les ouvertures (66) dans la première bague d'embrayage (58) ou la deuxième bague d'embrayage (60) étant formées et disposées de telle sorte qu'une dent (98, 100) de la denture axiale (98, 100) de la deuxième bague d'embrayage (58) ou de la première bague d'embrayage (60) dans la position d'engrènement recouvre une partie de surface (FS), rendue visible par l'ouverture (66), de l'aimant (66) logé dans l'ouverture.

3. Moyeu à roue libre (10) selon la revendication 1 ou 2,
les ouvertures (66) dans la première bague d'embrayage (58) ou dans la deuxième bague d'embrayage (60) étant formées au moins dans certaines parties entre deux dents (98, 100) adjacentes de la denture (98, 100) axiale de la première bague d'embrayage (58) ou de la deuxième bague d'embrayage (60), l'aimant (68) logé dans l'ouverture (66) respective enjambant la région entre des dents (98) adjacentes, laquelle région correspond sensiblement à une dent (98, 100) de la deuxième bague d'embrayage (60) ou de la première bague d'embrayage (58) dans la position d'engrènement.

4. Moyeu à roue libre (10) selon la revendication 3, la partie de surface (FS), rendue visible par l'ouverture (66), de l'aimant (68) logé dans l'ouverture (66), correspondant en termes de surface sensiblement à une surface de glissement (102, 104) d'une dent (98, 100) de la deuxième bague d'embrayage (58) ou de la deuxième bague d'embrayage (60).

5. Moyeu à roue libre (10) selon l'une des revendications 1 à 4,
au moins une douille de guidage (74) étant prévue sur la douille de moyeu (18), laquelle douille de guidage sert au guidage de la première et/ou de la deuxième bague d'embrayage (58, 60) dans la direction de l'axe de moyeu (18) et au désaccouplement, en termes de vibrations, de la douille de moyeu (18) du dispositif de roue libre (52) dans la direction circonférentielle.

6. Moyeu à roue libre (10) selon la revendication 5, au moins un aimant (78) étant logé dans l'au moins une douille de guidage (74).

7. Moyeu à roue libre (10) selon la revendication 5 ou 6,
au moins la première bague d'embrayage (58) présentant au moins un évidement (80) servant au logement de l'au moins une douille de guidage (74).

8. Moyeu à roue libre (10) selon l'une des revendications 5 à 7,
l'au moins une douille de guidage (74) étant montée sur la douille de moyeu (18) de manière à amortir les vibrations.

9. Moyeu à roue libre (10) selon l'une des revendications 5 à 8,
l'au moins une douille de guidage (74) réglant un entrefer prédéfini entre l'aimant (78) logé dans celle-ci et les bagues d'embrayage (58, 60).

10. Moyeu à roue libre (10) selon l'une des revendications 7 à 9,
l'au moins un évidement (80) dans la première bague d'embrayage (58) servant au logement de l'au moins une douille de guidage (74) étant formé et disposé de telle sorte que l'au moins un évidement (80) est recouvert par une dent (100) de la deuxième bague d'embrayage (60) au moins dans certaines parties dans la position d'engrènement.

11. Moyeu à roue libre (10) selon l'une des revendications 5 à 10,
un jeu prédéfini entre une denture radiale (96) de la douille de moyeu (18) et une denture radiale (94) au moins de la première bague d'embrayage (58) pouvant être réglé à l'aide de l'au moins une douille de guidage (74).

12. Moyeu à roue libre (10) selon l'une des revendications 1 à 11,
la force d'attraction produite par l'au moins un ensemble d'aimants (68) pouvant varier en fonction des positions angulaires de la première bague d'embrayage (58) et de la deuxième bague d'embrayage (60) l'une par rapport à l'autre.

13. Moyeu à roue libre (10) selon l'une des revendications 6 à 12,
la force d'attraction produite par l'au moins un aimant (78) dans l'au moins une douille de guidage (74) pouvant varier en fonction des positions angulaires de la première bague d'embrayage (58) et de la deuxième bague d'embrayage (60) l'une par rapport à l'autre.

14. Moyeu à roue libre (10) selon la revendication 12 ou 13,
la première bague d'embrayage (58) et la deuxième bague d'embrayage (60) étant formées de telle sorte que, dans au moins une position angulaire prédéfinie de la première bague d'embrayage (58) par rapport à la deuxième bague d'embrayage (60), seulement la force d'attraction de l'au moins un ensemble d'aimants (68) agit sur la deuxième bague d'embrayage (60).

15. Moyeu à roue libre (10) selon l'une des revendications 12 à 14,
la première bague d'embrayage (58) et la deuxième bague d'embrayage (60) étant formées de telle sorte que, dans au moins une position angulaire prédéfinie de la première bague d'embrayage (58) par rapport à la deuxième bague d'embrayage (60), les forces d'attraction de l'au moins un ensemble d'aimants (68) et de l'au moins un aimant (78) dans l'au moins une douille de guidage (74) agissent conjointement sur la deuxième bague d'embrayage (60).

16. Moyeu à roue libre (10) selon l'une des revendications 1 à 15,
la première bague d'embrayage (58) et/ou la deuxième bague d'embrayage (60) pouvant être désaccouplées de la douille de moyeu (18) au moins en termes de vibrations axiales par le biais d'au moins un élément de désaccouplement (62).

17. Moyeu à roue libre (10) selon l'une des revendications 5 à 16,
l'au moins une douille de guidage (74) présentant au moins une butée (116) pour la première bague d'embrayage (58) .

18. Moyeu à roue libre (10) selon l'une des revendications 5 à 17,
l'au moins une douille de guidage (74) présentant au moins une surface d'appui (118) servant à l'appui de l'au moins un élément de désaccouplement (62).
